# EUROPEAN PATENT APPLICATION

(11) **EP 4 834 058 A1**
(43) Date of publication of application: **04.11.2026**
(21) Application number: 24912813.3
(22) Date of filing: 24.12.2024
(51) Int. Cl.: A01B 63/00, A01B 61/02, A01M 7/00, B62D 21/18

(54) **WORK VEHICLE**

(30) Priority: 28.12.2023 JP 2023223365; 28.12.2023 JP 2023223362; 28.12.2023 JP 2023223363; 28.12.2023 JP 2023223364
(71) Applicant: KUBOTA CORPORATION, Osaka-shi, Osaka 530-0011 (JP)
(72) Inventor: TAKEDA, Kazuya, Sakai-shi, Osaka 590-0908 (JP); SOEJIMA, Masaru, Sakai-shi, Osaka 590-0908 (JP); SAKANO, Tomoyoshi, Sakai-shi, Osaka 590-0908 (JP); YOSHIDOME, Kazuhiro, Sakai-shi, Osaka 590-0908 (JP); ITO, Daigo, Sakai-shi, Osaka 590-0908 (JP); SASABE, Takashi, Sakai-shi, Osaka 590-0908 (JP); MIYAZAKI, Makoto, Sakai-shi, Osaka 590-0908 (JP); KAWABATA, Masahiro, Sakai-shi, Osaka 590-0908 (JP); SEINO, Kohei, Sakai-shi, Osaka 590-0908 (JP); HIBINO, Tsuyoshi, Sakai-shi, Osaka 590-0908 (JP); MATSUOKA, Ginji, Sakai-shi, Osaka 590-0908 (JP); TESHIMA, Takeshi, Sakai-shi, Osaka 590-0908 (JP); NAKASHIMA,Yoshiki, Sakai-shi, Osaka 590-0908 (JP); KUWANA, Yudai, Sakai-shi, Osaka 590-0908 (JP)
(74) Representative: Cabinet Beau de Loménie
(86) International application number: PCT/JP2024/045694
(87) International publication number: WO 2025/142926

(57) **Abstract**

A working vehicle including a mast mechanism to connect a vehicle body and a travel structural body in which the mast mechanism has high durability is to be provided.

A working vehicle (1) includes a vehicle body (2) movable in an up-down direction, a travel structural body (3) provided on a side of the vehicle body (2), and a plurality of mast mechanisms (7) each including a first member (71) attached to the travel structural body (3), a second member (72) attached to the vehicle body (2) and configured to raise and lower the vehicle body (2) by moving along the first member (71) in the up-down direction, and a restrictor (74) to restrict movement of the second member (72) in a restriction direction intersecting the up-down direction. The plurality of mast mechanisms (7) include a first mast mechanism (7A) and a second mast mechanism (7B) which are attached to the travel structural body (3) and the vehicle body (2) such that the restriction direction for restriction by the restrictor (74) of the first mast mechanism (7A) and the restriction direction for restriction by the restrictor (74) of the second mast mechanism (7B) differ from each other.

## Description

### Technical Field

The present invention relates to working vehicles to perform work, such as agricultural work.

### Background Art

Hitherto, the working mode for agricultural work and the like using a working vehicle has been shifting from a working mode in which work is performed through manual operation by a worker in the vehicle to working modes in which work is performed by a working vehicle that travels in an unmanned manner, such as a remote-control working mode in which a terminal device and/or the like is used by a worker to remotely operate a vehicle and an autonomous-driving working mode in which the GPS is used to cause a vehicle to travel along a route that is set in an agricultural field.

Therefore, conceivable vehicle forms include, for example, a tractor form in the related art such as that disclosed in PTL 1 including an operator's seat, and a form that is more convenient for executing target work such as agricultural work, and it is also conceivable to make these forms be excellent in protection and/or durability of each portion.

Here, in consideration of, for example, a case where an unmanned-operation working vehicle including a vehicle body and left and right travel structural bodies including, for example, wheels positioned on both the left side and the right side of the vehicle body is used to, for example, perform agricultural work by positioning the vehicle body, which is capable of being raised and lowered, to be in a state of being over a ridge and positioning the left and right travel structural bodies on both the left side and the right side of the ridge, it is conceivable to connect the vehicle body to the travel structural bodies by, for example, a mast mechanism such as that used in the forklift described in PTL 1.

### Citation List

### Patent Literature

PTL 1: Japanese Unexamined Patent Application Publication No. 2023-64964

### Summary of Invention

### Technical Problem

When such mast mechanisms are arrayed, for example, in the front-rear direction and in the left-right direction to be used for connection of the vehicle body to the left and right travel structural bodies, a working vehicle including mast mechanisms having high strength and excellent durability can be provided by determining a layout and the like for structures in consideration of, for example, a direction in which stress is applied.

### Solution to Problem

In an example embodiment of the present invention, a working vehicle includes a vehicle body movable in an up-down direction, a travel structural body provided on a side of the vehicle body, and a plurality of mast mechanisms each including a first member attached to the travel structural body, a second member attached to the vehicle body and configured to raise and lower the vehicle body by moving along the first member in the up-down direction, and a restrictor to restrict movement of the second member in a restriction direction intersecting the up-down direction. The plurality of mast mechanisms include a first mast mechanism and a second mast mechanism which are attached to the travel structural body and the vehicle body such that the restriction direction for the restrictor of the first mast mechanism and the restriction direction for the restrictor of the second mast mechanism differ from each other.

The first mast mechanism may be attached to the travel structural body and the vehicle body such that the restrictor restricts movement of the second member in a front-rear direction. The second mast mechanism may be attached to the travel structural body and the vehicle body such that the restrictor restricts movement of the second member in a lateral direction.

The vehicle body may be provided on a left side or a right side thereof with the plurality of mast mechanisms including the first mast mechanism and the second mast mechanism that are arrayed in a front-rear direction.

The vehicle body may be provided on the left side or the right side thereof with the plurality of mast mechanisms including the first mast mechanism and the second mast mechanism at a front portion thereof, a rear portion thereof, and a front-rear intermediate portion thereof between the front portion and the rear portion.

The first mast mechanism may be provided at each of the front portion and the rear portion. The second mast mechanism may be provided at the front-rear intermediate portion.

The vehicle body may be provided on each of a left side and a right side thereof with the plurality of mast mechanisms including the first mast mechanism and the second mast mechanism that are arrayed in a front-rear direction.

The vehicle body may be provided on each of the left side and the right side thereof with the plurality of mast mechanisms including the first mast mechanism and the second mast mechanism at a front portion thereof, a rear portion thereof, and a front-rear intermediate portion thereof between the front portion and the rear portion.

The first mast mechanism may be provided at each of the front portion and the rear portion. The second mast mechanism may be provided at the front-rear intermediate portion.

Among the plurality of mast mechanisms on the left side and the plurality of mast mechanisms on the right side, the mast mechanism on the left side and the mast mechanism on the right side which are arranged at positions coinciding to each other in the front-rear direction may be unified into either one of the first mast mechanism or the second mast mechanism.

The travel structural body may include an inner side surface facing a side surface of the vehicle body. The first member may be attached to the inner side surface of the travel structural body.

### Advantageous Effects of Invention

According to the working vehicle according to the example embodiment of present invention, it is possible to provide a vehicle having high durability due to a vehicle body and a travel structural body being connected to each other by mast mechanisms having reliable rigidity against a load applied in any direction.

### Brief Description of Drawings

[FIG. 1] FIG. 1 is a perspective view of a working vehicle.
[FIG. 2] FIG. 2 is a left side view of a working vehicle.
[FIG. 3] FIG. 3 is a right side view of a working vehicle.
[FIG. 4] FIG. 4 is a front view of a working vehicle.
[FIG. 5] FIG. 5 is a rear view of a working vehicle.
[FIG. 6] FIG. 6 is a plan view of a working vehicle.
[FIG. 7] FIG. 7 is a perspective view illustrating a vehicle body of a working vehicle and a frame structure of a travel structural body.
[FIG. 8] FIG. 8 is a block diagram illustrating a control system structure of a working vehicle.
[FIG. 9] FIG. 9 is a plan view of a working vehicle in a state in which a vehicle body is extended laterally.

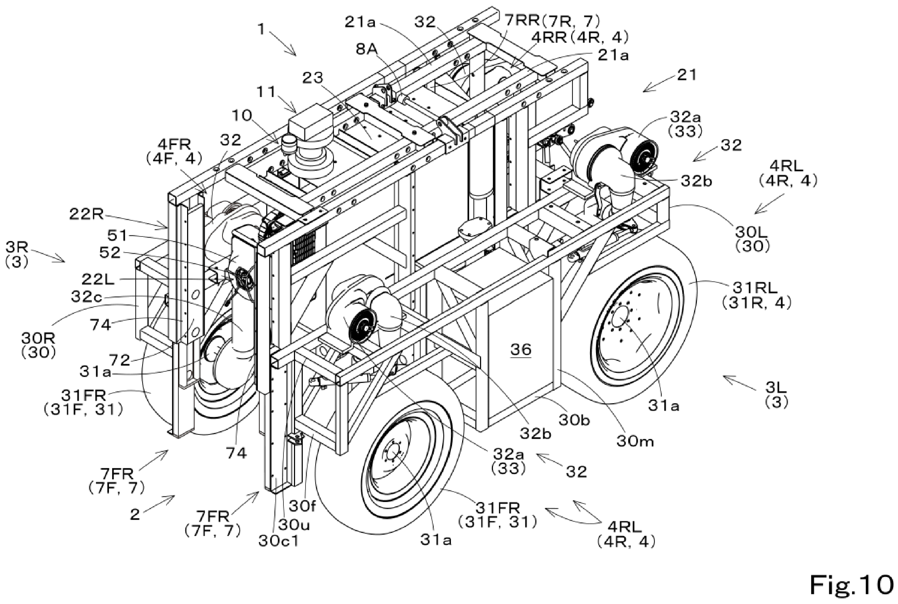

[FIG. 10] FIG. 10 is a perspective view of a working vehicle in a state in which a vehicle body is raised.
[FIG. 11] FIG. 11 is a left side view of a working vehicle in a state in which a vehicle body is raised.
[FIG. 12] FIG. 12 is a left side view of a vehicle body in a state in which a front body case is moved forward.
[FIG. 13] FIG. 13 is a schematic view of a working vehicle and illustrates switching of the front-rear position of a front body case in a state in which a vehicle body is raised.
[FIG. 14] FIG. 14 illustrates a layout of a mast mechanism in a left side view of a working vehicle.
[FIG. 15] FIG. 15 illustrates a layout of a mast mechanism in a plan view of a working vehicle.
[FIG. 16] FIG. 16 illustrates a layout of a first mast mechanism in a front view of a working vehicle.
[FIG. 17] FIG. 17 illustrates a layout of a mast mechanism in a left side view of a working vehicle in a state in which a vehicle body is raised.
[FIG. 18] FIG. 18 illustrates a layout of a first mast mechanism in a front view of a working vehicle in a state in which a vehicle body is raised.
[FIG. 19] FIG. 19 illustrates a layout of a second mast mechanism in a front view of a working vehicle in a state in which a vehicle body is raised.

### Description of Embodiments

Preferred example embodiments of a working vehicle 1 according to the present invention will be described with reference to the accompanying drawings.

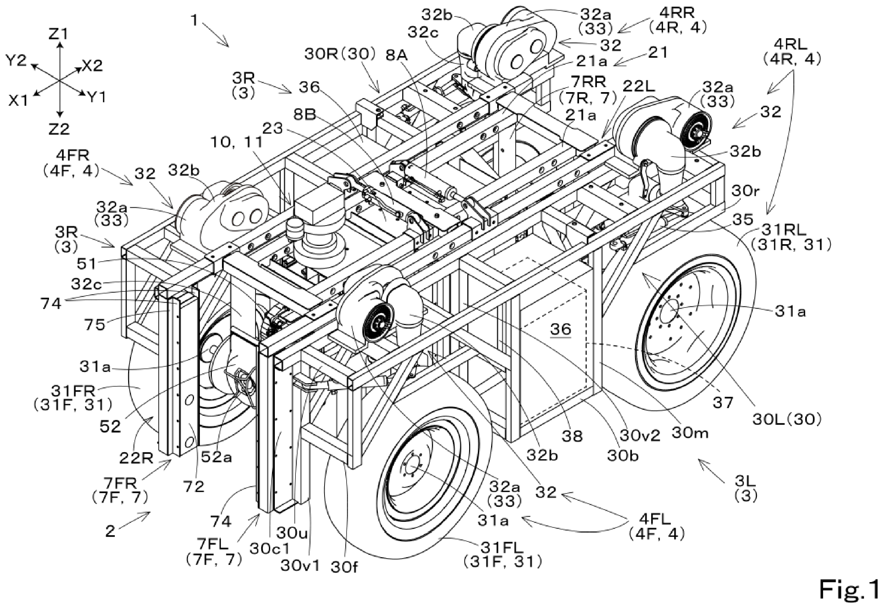

A direction of an arrow X1, a direction of an arrow X2, a direction of an arrow Y1, a direction of an arrow Y2, a direction of an arrow Z1, and a direction of an arrow Z2 in FIG. 1 are referred to as a forward direction, a rearward direction, a leftward direction, a rightward direction, an upward direction, and a downward direction, respectively, in the following description.

Work performed by the working vehicle 1 is, for example, work related to agriculture, work related to industry (civil engineering, construction, and the like), work related to transportation, or the like but is not limited to such work. In a preferred embodiment of the present invention, the work performed by the working vehicle 1 is work (agricultural work) related to agriculture. A case where the work performed by the working vehicle 1 is agricultural work is described below as an example. In this case, the working vehicle 1 is an agricultural working vehicle.

As illustrated in, for example, FIGS. 1 to 6, the working vehicle 1 includes a vehicle body 2, a left travel structural body 3L positioned on the left side of the vehicle body 2, and a right travel structural body 3R positioned on the right side of the vehicle body 2. Hereinafter, each of the left travel structural body 3L and the right travel structural body 3R may be referred to as the travel structural body 3.

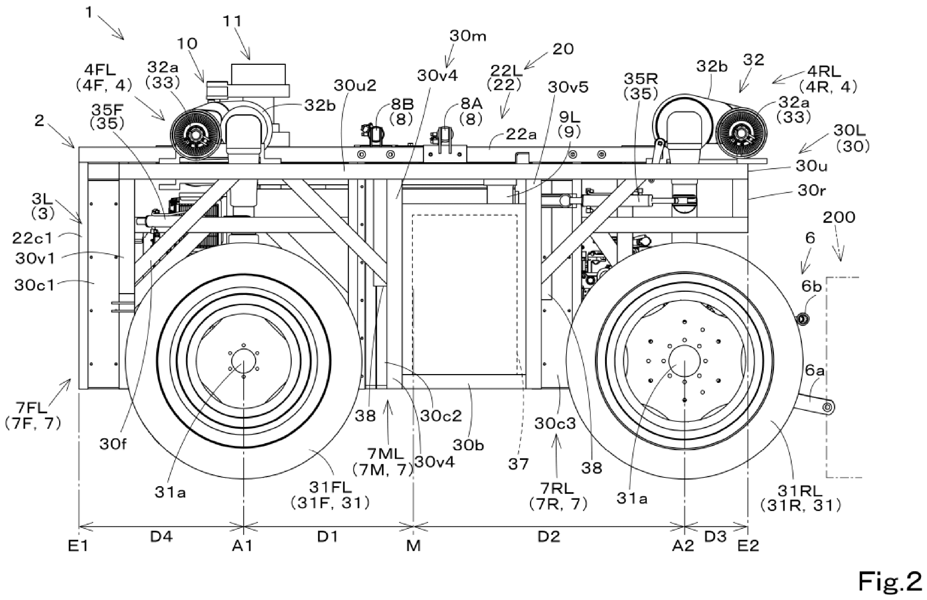

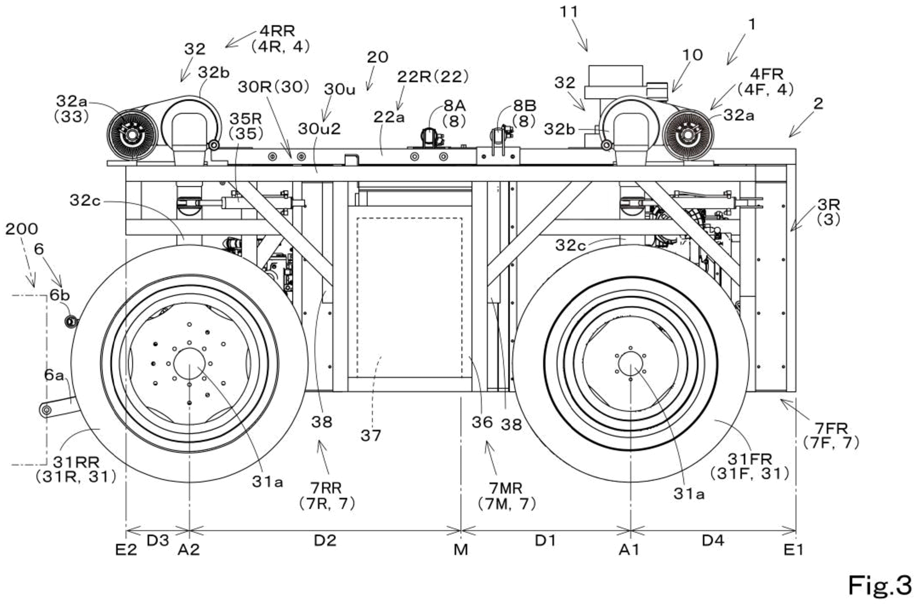

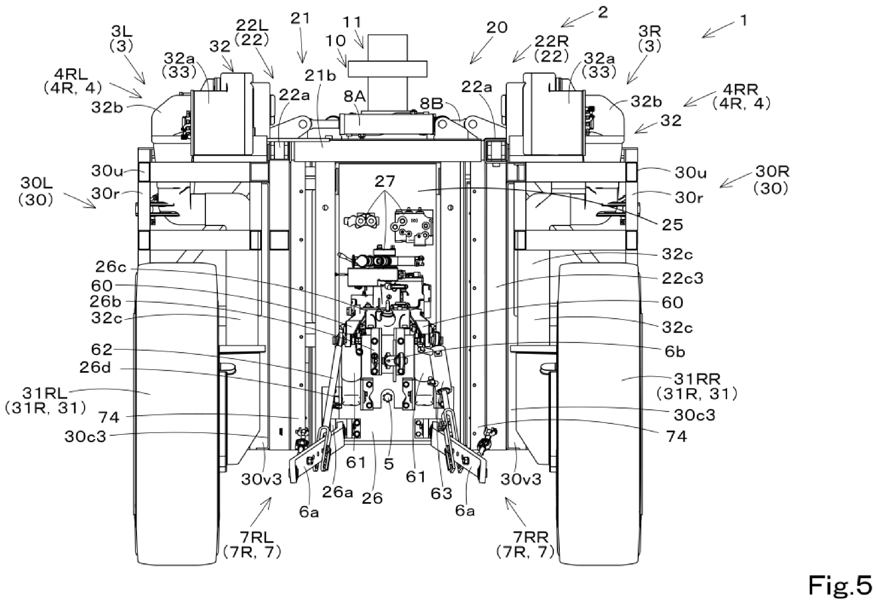

As illustrated in, for example, FIG. 5, the vehicle body 2 includes, at a rear end portion thereof, a PTO shaft 5 for transmitting a driving force to a working device (implement) 200 (refer to FIGS. 2 and 3) that is coupled to the working vehicle 1, and the rear end portion is configured such that a coupler 6 for coupling the working device 200 to the working vehicle 1 is mountable on the rear end portion.

As a structure of the coupler 6, various structures corresponding to types of the working device (implement) 200 are conceivable, and, in the present example embodiment, the structure of the coupler 6 is a three-point linkage including a pair of left and right lower links 6a and a single top link 6b.

The working device 200 can also be coupled to another portion (for example, a front end portion) of the vehicle body 2 of the working vehicle 1 other than the rear end portion of the vehicle body 2 and can receive a driving force from the working vehicle 1.

With reference to, for example, FIGS. 1 to 7, a structure of each travel structural body 3 is described. Each travel structural body 3 includes a travel frame 30 and a pair of wheel units 4. The pair of wheel units 4 include a front wheel unit 4F supported at a front portion of the travel frame 30, and a rear wheel unit 4R supported at a rear portion of the travel frame 30.

Each wheel unit 4 includes a single wheel 31 and a wheel driving case 32 that supports the wheel 31. The wheel 31 of the front wheel unit 4F is a front wheel 31F, and the wheel 31 of the rear wheel unit 4R is a rear wheel 31R.

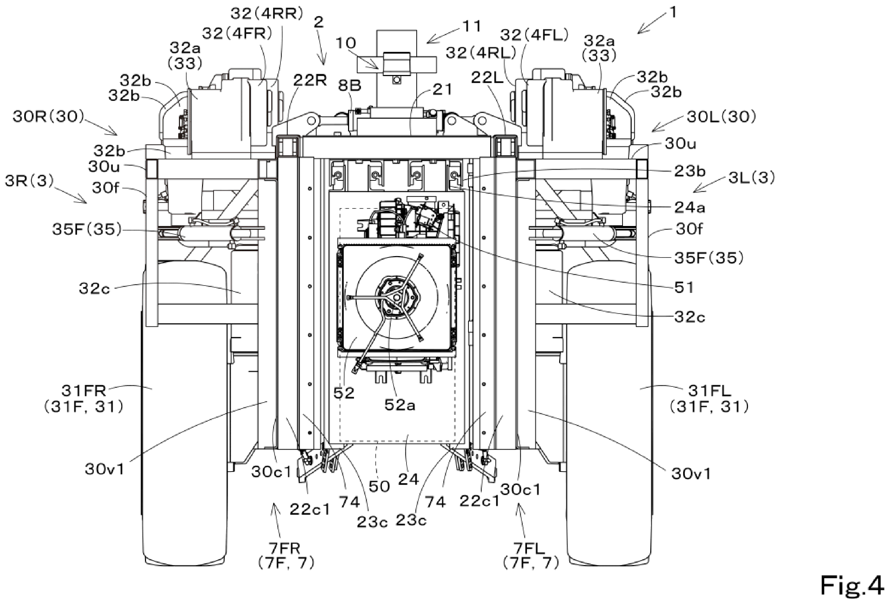

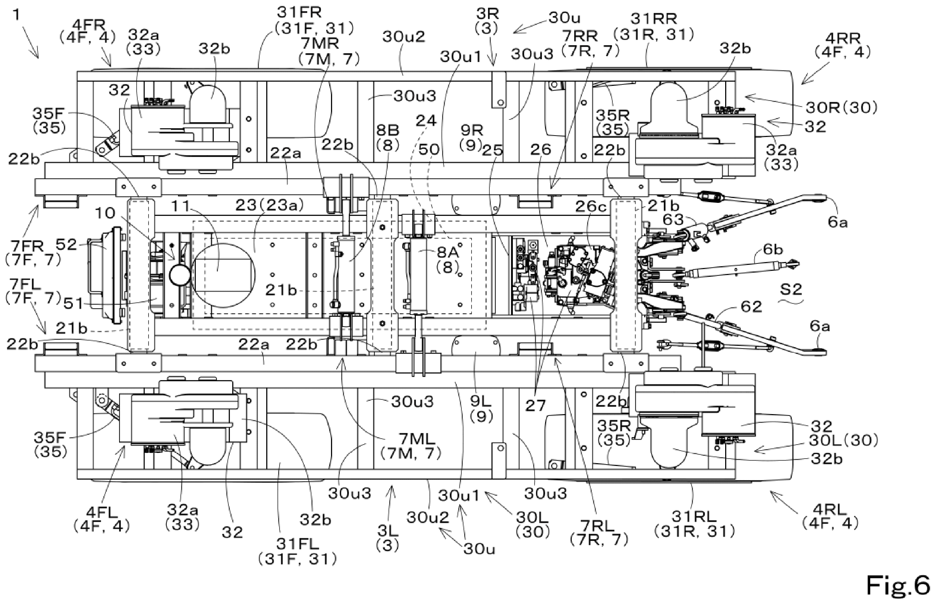

As illustrated in, for example, the front view in FIG. 4, the rear view in FIG. 5, and the plan view in FIG. 6, the position of the outer end of the travel frame 30 is substantially coincident with the position of the outer end of the wheel 31 (the front wheel 31F and the rear wheel 31R) in a lateral direction.

The diameter of the front wheel 31F is identical or substantially identical to the diameter of the rear wheel 31R. The diameter of the front wheel 31F may differ from the diameter of the rear wheel 31R. At least one of the front wheel 31F and the rear wheel 31R may be a driving wheel (driving sprocket) of a crawler traveling device.

Further, the travel frame 30 of the left travel structural body 3L is a left travel frame 30L, the front wheel unit 4F supported at a front portion of the left travel frame 30L is a left front wheel unit 4FL including a left front wheel 31FL, and the rear wheel unit 4R supported at a rear portion of the left travel frame 30L is a left rear wheel unit 4RL that axially supports the left rear wheel 31RL.

The travel frame 30 of the right travel structural body 3R is a right travel frame 30R, the front wheel unit 4F supported at a front portion of the right travel frame 30R is a right front wheel unit 4FR that axially supports a right front wheel 31FR, and the rear wheel unit 4R supported at a rear portion of the right travel frame 30R is a right rear wheel unit 4RR that axially supports the right rear wheel 31RR.

The wheel driving case 32 of each wheel unit 4 includes a motor accommodation portion 32a, a transmission-mechanism accommodation portion 32b, and a rotary cylinder portion 32c. The motor accommodation portion 32a and the transmission-mechanism accommodation portion 32b are integrated with each other at an upper portion of the wheel driving case 32, and the rotary cylinder portion 32c extends perpendicularly downward from the transmission-mechanism accommodation portion 32b extending on a side of the motor accommodation portion 32a. The rotary cylinder portion 32c is connected to the transmission-mechanism accommodation portion 32b to be rotatable relative to the transmission-mechanism accommodation portion 32b.

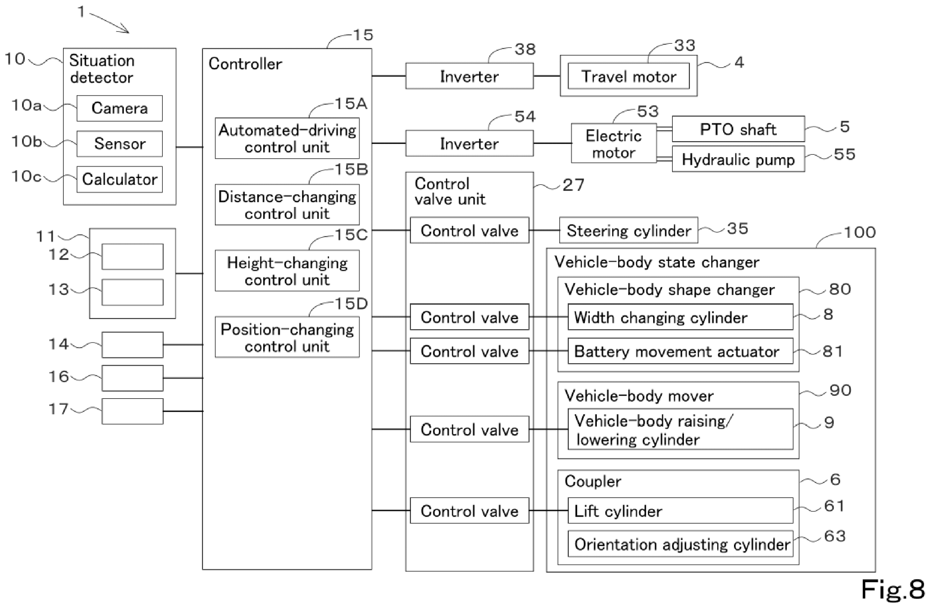

A travel motor 33 (refer to FIG. 8) is accommodated inside the motor accommodation portion 32a, and a vertical transmission shaft 34 having an axis in an up-down (perpendicular) direction is supported inside the rotary cylinder portion 32c to be rotatable around the axis. A center shaft (axle) 31a of the wheel 31 is inserted in and supported by a lower end portion of the rotary cylinder portion 32c. In other words, the axle 31a protrudes laterally outward from a lower portion of the rotary cylinder portion 32c of the wheel driving case 32, and the wheel 31 provided around the axle 31a is positioned laterally outward of the rotary cylinder portion 32c.

A transmission mechanism including a bevel gear that provides interlocking connection between an output shaft of the travel motor 33 and an upper portion of the vertical transmission shaft 34, an endless belt, and the like is accommodated inside the transmission-mechanism accommodation portion 32b. Further, a transmission mechanism including a bevel gear that provides interlocking connection between a lower portion of the vertical transmission shaft 34 and the axle 31a of the wheel 31 is accommodated at a lower portion of the rotary cylinder portion 32c.

The travel frame 30 that supports the wheel driving case 32 axially supporting the axle 31a of the wheel 31 may be described as the travel frame 30 that supports the axle 31a.

Due to the configuration above, an output of the travel motor 33 is transmitted to the wheel 31 through the vertical transmission shaft 34 inside the wheel driving case 32, and the wheel 31 is driven by the output. That is, the left front wheel 31FL, the right front wheel 31FR, the left rear wheel 31RL, and the right rear wheel 31RR are each a driving wheel that is driven by an output of a respective travel motor 33.

The rotary cylinder portion 32c of each wheel driving case 32 extends in the up-down direction as described above, and the axis of the vertical transmission shaft 34 in the up-down direction coincides to the axis of the rotary cylinder portion 32c. In the wheel driving case 32, an upper portion, as the motor accommodation portion 32a and the transmission-mechanism accommodation portion 32b, is attached and fixed to the travel frame 30, and the rotary cylinder portion 32c is rotatable about the axis in the up-down direction with respect to the upper portion.

The travel frame 30 supports a pair of front and rear steering cylinders 35. The steering cylinder 35 supported at a front portion of the travel frame 30 is a front steering cylinder 35F, one end (cylinder bottom) of the front steering cylinder 35F is connected to the travel frame 30, and another end (piston rod head) of the front steering cylinder 35F is connected to an outer portion of the rotary cylinder portion 32c of the wheel driving case 32 of the front wheel unit 4F.

The steering cylinder 35 supported at a rear portion of the travel frame 30 is a rear steering cylinder 35R, one end (cylinder bottom) of the rear steering cylinder 35R is connected to the travel frame 30, and another end (piston rod head) of the rear steering cylinder 35R is connected to an outer portion of the rotary cylinder portion 32c of the wheel driving case 32 of the rear wheel unit 4R.

The rotary cylinder portion 32c of each wheel driving case 32 is rotated about the axis in the up-down direction by extension and contraction of the steering cylinder 35 with the wheel 31 being axially supported. That is, the wheel 31 is a driving wheel that is driven by the travel motor 33 as described above and is a steering wheel capable of rotating in the lateral direction relative to the travel frame 30, that is, capable of changing an angle thereof in the lateral direction.

Each travel motor 33 is an electric motor, and the travel structural body 3 includes an inverter 38 for controlling an output of the electric motor. As illustrated in FIG. 8, the inverter 38 is controlled by a controller 15 to control the output rotation speed and the output rotation direction of the travel motor 33.

Although only a combination of the travel motor 33 and the inverter 38 of the single wheel unit 4 is illustrated in the block diagram in FIG. 8, the single wheel unit 4 represents each of the four wheel units 4FL, 4FR, 4RL, and 4RR, and the controller 15 controls the inverters 38 for respective wheel units 4 to individually control the rotation speed and the rotation direction of each wheel 31.

As illustrated in, for example, FIGS. 1 to 3, the travel frame 30 of each travel structural body 3 supports a battery case 36 at an intermediate portion between a front portion that supports the wheel driving case 32 of the front wheel unit 4F and a rear portion that supports the wheel driving case 32 of the rear wheel unit 4R.

A battery (side battery) 37 that supplies electric power to the travel motor 33 of each of the front wheel unit 4F and the rear wheel unit 4R is accommodated inside the battery case 36. Additionally, by the travel frame 30, the inverter 38 for the front wheel unit 4F is supported forward of the battery case 36, and the inverter 38 for the rear wheel unit 4R is supported rearward of the battery case 36. The inverter 38 is not limited to be positioned as illustrated and may be provided, for example, inside the battery case 36.

The front wheel unit 4F and the rear wheel unit 4R of each travel structural body 3 (the left travel structural body 3L, the right travel structural body 3R) drive respective travel motors 33 by electric power supplied from a battery (a center battery 50 and/or the side battery 37) provided at the working vehicle 1.

The inverters 38 provided for respective wheel units 4 convert direct current from the battery 37 or 50 into alternating current and apply the alternating current at a set voltage and/or frequency to the travel motors 33 of the wheel units 4 corresponding thereto.

As illustrated in FIG. 8, the controller 15 controls the value of the voltage and/or frequency set in each of the inverters 38 to control the output rotation speed and/or torque of the corresponding travel motor 33, thereby controlling the rotation speed and/or torque of the wheel 31 of the corresponding wheel unit 4.

Each of the steering cylinders 35 is a hydraulic cylinder (hydraulic actuator) and is moved to extend and contract by hydraulic fluid that is delivered by a hydraulic pump 55 (described later) provided at the vehicle body 2 and that is supplied via a corresponding control valve.

As illustrated in FIG. 8, the controller 15 controls the position (spool) of the control valve of a control valve unit 27 to control the extension amount of a piston rod thereof, and the wheel 31 of the corresponding wheel unit 4 is steered.

Although, similarly to the travel motor 33 and the inverter 38 described above, only the single steering cylinder 35 is illustrated in the block diagram of FIG. 8, this steering cylinder 35 is included in each of the wheel units 4, and the controller 15 controls the control valves for the steering cylinders 35 of respective wheel units 4 to individually control the steering angle (left and right turning angles) of each wheel 31.

Each steering cylinder 35 may be an air cylinder, a water hydraulic cylinder, or the like having a configuration other than that of a hydraulic cylinder. Additionally, for example, an actuator that steers the wheels 31 may be, other than such an extension-contraction actuator, a electric motor, a hydraulic motor, and the like having a configuration in which a rotational force is output to rotate the rotary cylinder portions 32c.

Here, a structure of the travel frame 30 is described with reference to, for example, FIGS. 1 to 7.

That is, the working vehicle 1 includes the vehicle body 2, the wheel 31 that is provided on a side of the vehicle body 2, and the travel frame 30 that is provided on a side of the vehicle body 2 and that supports the wheel 31. The travel frame 30 includes an upper frame 30u positioned above the wheel 31 and includes an apparatus positioning space at an upper portion of the upper frame 30u.

In the present example embodiment, as described later, an apparatus positioning space is provided, above the front wheel 31F and the rear wheel 31R, at an upper portion of the upper frame 30u of each of the left and right travel frames 30. However, the apparatus positioning space may be provided, above at least one wheel 31 (for example, one of the front wheel 31F and the rear wheel 31R), at an upper portion of the upper frame 30u of at least one travel frame 30 (for example, one of the left and right travel frames 30L and 30R).

The wheel 31 includes the front wheel 31F and the rear wheel 31R, and the upper frame 30u includes a front member provided above the front wheel 31F and a rear member provided above the rear wheel 31R and includes an apparatus positioning space at an upper portion of the front member and an upper portion of the rear member.

In the present example embodiment, flat surfaces that are flush with each other are provided, as an apparatus positioning space, from the front end to the rear end of the upper frame 30u of the travel frame 30, including the front member above the front wheel 31F and the rear member above the rear wheel 31R. That is, the upper frame 30u is provided to extend from a portion above the front wheel 31F to a portion above the rear wheel 31R, and the apparatus positioning space is provided in a range extending from a portion above the front wheel 31F to a portion above the rear wheel 31R. However, it is sufficient for the apparatus positioning space to be provided at least at the front member and the rear member of the upper frame 30u. For example, the front member and the rear member may be separated from each other with a gap therebetween, and the apparatus positioning space may be a non-flat surface usable as a space for apparatus positioning.

The vehicle body 2 is movable in the up-down direction relative to the travel frame 30 but does not include a portion that interferes with the apparatus positioning space during the movement in the up-down direction relative to the travel frame 30. As described above, the apparatus positioning space may be provided above a single wheel 31, and, in this case, it is sufficient for the vehicle body 2 not to include a portion that interferes with the apparatus positioning space above the wheel 31.

The working vehicle 1 includes, at a location inward of the travel frame 30 in the lateral direction, that is, on a side of the vehicle body 2, at least one raising/lowering device that moves the vehicle body 2 in the up-down direction.

This configuration is also a configuration in which the vehicle body 2 does not include a portion that interferes with the apparatus positioning space at an upper portion of the upper frame 30u of the travel frame 30 during vertical movement of the vehicle body 2. This is because, if the raising/lowering device is present, instead of laterally inward of the travel frame 30, between the left end and the right end, that is, within the lateral width of the travel frame 30, and the raising/lowering device has a structure that extends and contracts vertically, the raising/lowering device may protrude upward from the travel frame 30 during raising of the vehicle body 2 and interfere with an apparatus that is positioned at the apparatus positioning space provided at the upper frame 30u. Even if the raising/lowering device is provided laterally outward of the travel frame 30, the configuration does not include a portion that interferes with the apparatus positioning space while the vehicle body 2 is vertically moved. However, connection of the raising/lowering device to the vehicle body 2 is facilitated by positioning the raising/lowering device laterally inward of the travel frame 30, and compactness of the working vehicle 1 in the lateral width direction can be ensured.

The raising/lowering device in the present example embodiment is, as described later, a vehicle-body raising/lowering cylinder 9, which is a hydraulic actuator extending downward from an upper portion of each of vehicle-body side portion frames 22 defining the left and right ends of the vehicle body 2. However, the raising/lowering device may be any device such as, for example, a device using an electric motor. The raising/lowering device does not need to be provided inside the vehicle body 2 and may be provided laterally outward of the vehicle body 2 as long as the raising/lowering device is provided laterally inward of the travel frame 30.

The travel frame 30 includes, below the upper frame 30u, a lower frame 30b between the front wheel 31F and the rear wheel 31R and includes, on a side of the vehicle body 2 and between the front wheel 31F and the rear wheel 31R, an apparatus positioning space between the upper frame 30u and the lower frame 30b of the travel frame 30.

In the present example embodiment, a space for apparatus positioning (for positioning of the side battery 37) between the upper frame 30u and the lower frame 30b is provided at each of the left and right travel frames 30L and 30R. However, only one of the left and right travel frames 30L and 30R may be configured as described above.

As described later, the vehicle body 2 is connected to the travel frame 30 to be movable in the up-down direction relative to the travel frame 30. However, the vehicle body 2 does not include a portion that vertically overlaps the upper frame 30u of the travel frame 30 when the vehicle body 2 is positioned at a lowest position within a range of movement in the up-down direction relative to the travel frame 30. For example, although, when an upper portion of the vehicle body 2 is provided with a portion projecting laterally outward, the portion may vertically overlap the upper frame 30u when the vehicle body 2 is at the lowest position, the vehicle body 2 does not include such a projecting portion in the present example embodiment.

That is, the configuration that does not include a portion, such as that described above, where the vehicle body 2 and the travel frame 30 vertically overlap each other is also a configuration in which the vehicle body 2 does not include a portion that interferes with the apparatus positioning space at an upper portion of the upper frame 30u of the travel frame 30 during vertical movement of the vehicle body 2. This is because, if the vehicle body 2 includes a portion that vertically overlaps the upper frame 30u of the travel frame 30 when the vehicle body 2 is at the lowest position, there is a possibility of the portion interfering with an apparatus positioned at the apparatus positioning space provided at the upper frame 30u.

The vehicle body 2 is connected to the travel frame 30 through a mast mechanism 7 positioned inward of the travel frame 30 in the lateral direction. The mast mechanism 7 supports the vehicle body 2 that is moved vertically by actuation of the raising/lowering device described above, and, similarly to the above-described raising/lowering device, the mast mechanism 7 is also positioned laterally inward of the travel frame 30. Therefore, the configuration does not include a portion that interferes with the apparatus positioning space at an upper portion of the upper frame 30u of the travel frame 30 during vertical movement of the vehicle body 2.

Due to such a configuration described above, interference between an apparatus at the vehicle body 2 and an apparatus positioned on the upper frame 30u of the travel frame 30 is avoided or reduced regardless of raising and lowering of the vehicle body 2, a large space for apparatus positioning is constantly ensured above the travel frame 30, and there is a possibility that even an apparatus having a considerably large volume can be installed.

In the working vehicle 1, the wheel 31 and the travel frame 30 are provided on each of the left side and the right side of the vehicle body 2, and the vehicle body 2 is positioned between the travel frame 30L on the left side of the vehicle body 2 and the travel frame 30R on the right side of the vehicle body 2.

A specific structure of the travel frame 30 is described below in detail. The travel frame 30 includes the upper frame 30u, which is an upper end portion thereof. The upper frame 30u is a ladder-shaped portion that includes an inner main bar member 30u1 and an outer main bar member 30u2, which are a pair of left and right bar members extending in the front-rear direction, and a plurality of lateral bar members 30u3 extending in the lateral direction so as to connect the inner main bar member 30u1 and the outer main bar member 30u2 to each other.

As illustrated in, for example, the plan view in FIG. 6, the front end of the upper frame 30u is present forward of the front end of the front wheel 31F, and the rear end of the upper frame 30u is positioned between the rear end of the rear wheel 31R and the axle 31a of the rear wheel 31R.

The inner main bar member 30u1 defines the laterally inner end of the travel frame 30, and the outer main bar member 30u2 defines the laterally outer end of the travel frame 30. That is, in the upper frame 30u of the left travel frame 30L of the left travel structural body 3L, the inner main bar member 30u1 is positioned on the right side and the outer main bar member 30u2 is positioned on the left side, and, in the upper frame 30u of the right travel frame 30R of the right travel structural body 3R, the inner main bar member 30u1 is positioned on the left side and the outer main bar member 30u2 is positioned on the right side.

The front ends of the inner main bar member 30u1 and the outer main bar member 30u2 define the front end of the travel frame 30, and the rear ends of the inner main bar member 30u1 and the outer main bar member 30u2 define the rear end of the travel frame 30. That is, the upper frame 30u extends from the front end to the rear end of the travel frame 30 to be long in the front-rear direction.

The lateral width of the upper frame 30u, the lateral width being a total of the length of each lateral bar member 30u3 extending in the lateral direction, the lateral width of the inner main bar member 30u1, and the lateral width of the outer main bar member 30u2, defines the lateral width of the travel frame 30.

The lateral width of the travel frame 30 is ensured to be a width that is sufficient for the left and right ends of the wheel units 4 not to protrude laterally outward from the left and right ends of the travel frame 30. Therefore, components and members included in the travel structural body 3 or apparatuses and the like provided at the travel structural body 3 do not protrude from the travel structural body 3 to intrude into the vehicle body 2 positioned laterally inward of the travel structural body 3, and thus do not impede a later-described vertical movement of the vehicle body 2 with respect to the travel structural body 3.

Due to the upper frame 30u having such a configuration, a free space extending over a large range in the front-rear direction and in the lateral direction is ensured at an upper portion of the travel frame 30. In the upper frame 30u, a plurality of frames each having a quadrilateral shape (a rectangular shape or a square shape) in plan view are provided so as to be arranged consecutively in the front-rear direction, and each of the frames includes the inner main bar member 30u1 and the outer main bar member 30u2 on the left and right sides and the pair of front and rear lateral bar members 30u3. Upper end surfaces of the bar members 30u1, 30u2, and 30u3 that define the upper frame 30u are flush with each other, and upper end surfaces of the quadrilateral frames described above are flat surfaces. Therefore, the flat surfaces of the frames can be provided as an apparatus setting surface, and, since the flat surfaces extend from the front end to the rear end of the upper frame 30u, a large space having a length corresponding to the total length of the upper frame 30u in the front-rear direction from the front end to the rear end thereof is ensured above the upper frame 30u and allows apparatuses of various types to be positioned in various layouts in this space.

When the upper frame 30u is divided into three portions, which are a front portion, an intermediate portion, and a rear portion, in the front-rear direction, the front portion of the upper frame 30u is positioned above the front wheel 31F, the rear portion of the upper frame 30u is positioned above the rear wheel 31R, and the intermediate portion of the upper frame 30u is positioned between the front wheel 31F and the rear wheel 31R in the front-rear direction.

That is, a space (the above-described flat surfaces of the quadrilateral frames) usable for apparatus setting as described above is provided, above the front wheel 31F, at a front portion of the upper frame 30u, a space (the above-described flat surfaces of the quadrilateral frames) usable for apparatus setting is also provided, above the rear wheel 31R, at a rear portion of the upper frame 30u, and these front and rear spaces are connected through the intermediate portion of the upper frame 30u. Therefore, at an upper portion of the upper frame 30u, an apparatus setting space defined by the flat surfaces of the plurality of quadrilateral frames is provided in a range that is long in the front-rear direction from a portion above the front wheel 31F to a portion above the rear wheel 31R.

An upper portion (the motor accommodation portion 32a and the transmission-mechanism accommodation portion 32b) of the wheel driving case 32 of the front wheel unit 4F passes through a space between the front and rear lateral bar members 30u3 defining a front portion of the upper frame 30u of the travel frame 30 and protrudes upward from the front portion of the upper frame 30u to be attached and fixed to at least one lateral bar member 30u3.

A plurality of bar members are provided to extend downward from the front portion of the upper frame 30u, and, at a location directly above the front wheel 31F, the plurality of bar members define a front fender 30f that covers the rotary cylinder portion 32c of the wheel driving case 32 of the front wheel unit 4F and the front steering cylinder 35F.

The plurality of bar members defining the front fender 30f include a longitudinal bar member 30v1 provided to extend downward from a portion near the front end of the inner main bar member 30u1. A tabular mast attachment plate 30c1 extending forward, rearward, upward, and downward is provided to extend forward of the longitudinal bar member 30v1. A later-described travel-side mast member 71 of the mast mechanism 7 (7F) is attached and fixed to a laterally inner side surface (a surface facing a side surface of the vehicle body 2) of the mast attachment plate 30c1.

An upper portion (the motor accommodation portion 32a and the transmission-mechanism accommodation portion 32b) of the wheel driving case 32 of the rear wheel unit 4R passes through a space between the front and rear lateral bar members 30u3 defining a rear portion of the upper frame 30u of the travel frame 30 and protrudes upward from the rear portion of the upper frame 30u to be attached and fixed to at least one lateral bar member 30u3.

A plurality of bar members are provided to extend downward from the rear portion of the upper frame 30u, and, at a location directly above the rear wheel 31R, the plurality of bar members define a rear fender 30r that covers the rotary cylinder portion 32c of the wheel driving case 32 of the rear wheel unit 4R and the rear steering cylinder 35R.

As described above, of the free space provided at an upper portion of the upper frame 30u, a front portion is used for positioning at an upper portion of the wheel driving case 32 of the front wheel unit 4F, and a rear portion is used for positioning at an upper portion of the wheel driving case 32 of the rear wheel unit 4R.

At an upper portion of the upper frame 30u, a large free space is still ensured between the front wheel unit 4F and the rear wheel unit 4R. By using this space, various apparatuses can be installed at the upper frame 30u.

For example, when, as the working device 200, a chemical sprayer is coupled to the working vehicle 1, it is conceivable to install a chemical tank, which stores a chemical agent to be supplied to the chemical sprayer, at the upper portion of the upper frame 30u.

Here, since the upper frame 30u has a lateral width that is sufficiently large enough to correspond to the lateral width of the wheel unit 4 including the wheel 31 and the wheel driving case 32, even a large-capacity chemical tank can be installed at the upper frame 30u so as not to protrude from the laterally outer end of the travel structural body 3.

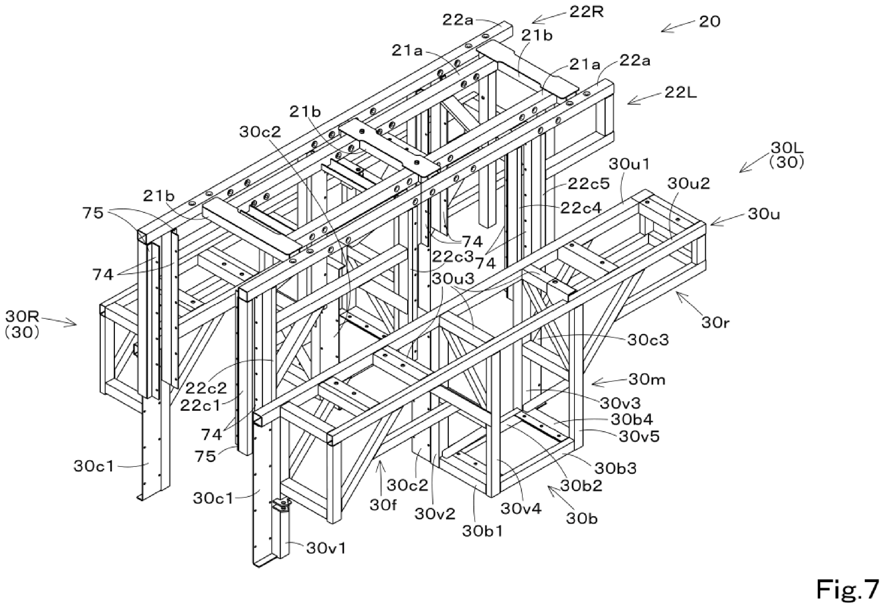

Between the front fender 30f and the rear fender 30r, an intermediate fender 30m extends downward from the intermediate portion of the upper frame 30u. Specifically, as illustrated in FIG. 7, a longitudinal bar member 30v2, which defines the front end (the rear end of the front fender 30f) of the intermediate fender 30m, and a longitudinal bar member 30v3, which defines the rear end (the front end of the rear fender 30r) of the intermediate fender 30m, are provided to extend downward from the inner main bar member 30u1.

A longitudinal bar member 30v4 is provided at a position corresponding to the longitudinal bar member 30v2 in the front-rear direction to extend downward from the outer main bar member 30u2, and a longitudinal bar member 30v5 is provided at a position corresponding to the longitudinal bar member 30v3 in the front-rear direction to extend downward from the outer main bar member 30u2. These four longitudinal bar members 30v2, 30v3, 30v4, and 30v5 define the four corners of a rectangular parallelepiped shape of the intermediate fender 30m.

Lower ends of the longitudinal bar members 30v2, 30v3, 30v4, and 30v5 are connected to each other by bottom bar members 30b1, 30b2, 30b3, and 30b4 that are arranged in a quadrilateral shape in the horizontal direction. As described above, the lower frame 30b is defined at a bottom portion of the intermediate fender 30m by the bottom bar members 30b1, 30b2, 30b3, and 30b4.

The battery case 36 is placed so as to bridge between the front and rear bottom bar members 30b1 and 30b4 extending in the lateral direction and defining the lower frame 30b. The battery case 36 that is thus placed at the lower frame 30b is positioned so as to be surrounded by the longitudinal bar members 30v2, 30v3, 30v4, and 30v5 defining the intermediate fender 30m. That is, the battery case 36 is positioned inside a space defined between the front wheel 31F and the rear wheel 31R and between the upper frame 30u and the lower frame 30b of the travel frame 30.

The longitudinal bar member 30v2 at the laterally inner front end of the intermediate fender 30m supports a middle mast mechanism 7M described below, and the longitudinal bar member 30v3 at the laterally inner rear end of the intermediate fender 30m supports a rear mast mechanism 7R described below.

That is, a tabular mast attachment plate 30c2 extending laterally and vertically is provided to extend laterally inward (on a side of the vehicle body 2) of the longitudinal bar member 30v2. The travel-side mast member 71 of the middle mast mechanism 7M is attached and fixed to a front surface of the mast attachment plate 30c2.

A tabular mast attachment plate 30c3 extending forward, rearward, upward, and downward is provided to extend rearward of the longitudinal bar member 30v3. The travel-side mast member 71 of the rear mast mechanism 7R is attached and fixed to a laterally inner side (the side facing the vehicle body 2) surface of the mast attachment plate 30c3.

The configuration of each travel structural body 3, that is, respective configurations of the left travel structural body 3L and the right travel structural body 3R are as described above. Next, a configuration of the vehicle body 2 positioned between the left travel structural body 3L and the right travel structural body 3R and a configuration of each of various apparatuses placed at the vehicle body 2 are described.

As illustrated in, for example, FIGS. 1 to 6, the vehicle body 2 includes a vehicle-body frame structural body 20, and a front body case (battery case) 24 and a rear body case (PTO case) 26 that are supported by the vehicle-body frame structural body 20.

The vehicle-body frame structural body 20 includes a vehicle-body central frame 21, a left vehicle-body side portion frame 22L positioned on the left side of the vehicle-body central frame 21, and a right vehicle-body side portion frame 22R positioned on the right side of the vehicle-body central frame 21. Hereinafter, the left vehicle-body side portion frame 22L and the right vehicle-body side portion frame 22R may be referred to as the vehicle-body side portion frames 22.

The vehicle-body central frame 21 includes a pair of left and right main bar members 21a extending in the front-rear direction, and a plurality of lateral cylinder members 21b extending in the lateral direction so as to connect the left and right main bar members 21a to each other.

A tabular support member 23 is provided to be fixed to a lower portion of a portion of the vehicle-body central frame 21 extending from the front end to a mid-portion in the front-rear direction, and the front body case 24 having a parallelepiped shape extends downward from the support member 23. An upper end portion of the front body case 24 is engaged with the support member 23 to be movable in the front-rear direction.

Specifically, the support member 23 includes a tabular portion 23a (refer to, for example, FIG. 6) that is attached to a bottom surface of a front portion of the vehicle-body central frame 21, and a rail member 23b (refer to FIG. 4) that extends in the front-rear direction to extend downward from the tabular portion 23a and that is provided, at a lower portion thereof, with a rail having a shape of a round rod extending in the front-rear direction.

An engagement member 24a (refer to FIG. 4) that extends in the front-rear direction so as to correspond to the rail member 23b of the support member 23 is provided to protrude upward from an upper end surface of the front body case 24. The engagement member 24a has a groove extending in the front-rear direction. The round-rod shaped rail provided at the rail member 23b is fitted into this groove to thereby engage the engagement member 24a with the rail member 23b to be slidable forward and rearward, and, consequently, the front body case 24 is supported by the support member 23 to be movable in the front-rear direction.

In order to ensure the strength of support of the front body case 24, which is a heavy object when accommodating the center battery 50 (described below), by the support member 23, the support member 23 and the front body case 24 may be provided with a plurality of combinations of the rail member 23b and the engagement member 24a. In the present example embodiment, four such combinations are provided. However, the number of the combinations is not limited thereto.

Further, as illustrated in FIG. 4, the support member 23 is provided with support side plates 23c extending downward on both the left and right sides of the front body case 24 and, at a lower portion thereof, a horizontal surface portion extending forward and rearward to support the front body case 24 from below.

A configuration in which the front body case 24 is supported by the vehicle-body frame structural body 20 to be movable in the front-rear direction is not limited to that described above and may be any structure as long as it is possible to ensure that the front body case 24 is movable in the front-rear direction with respect to the support member 23 and the vehicle-body central frame 21.

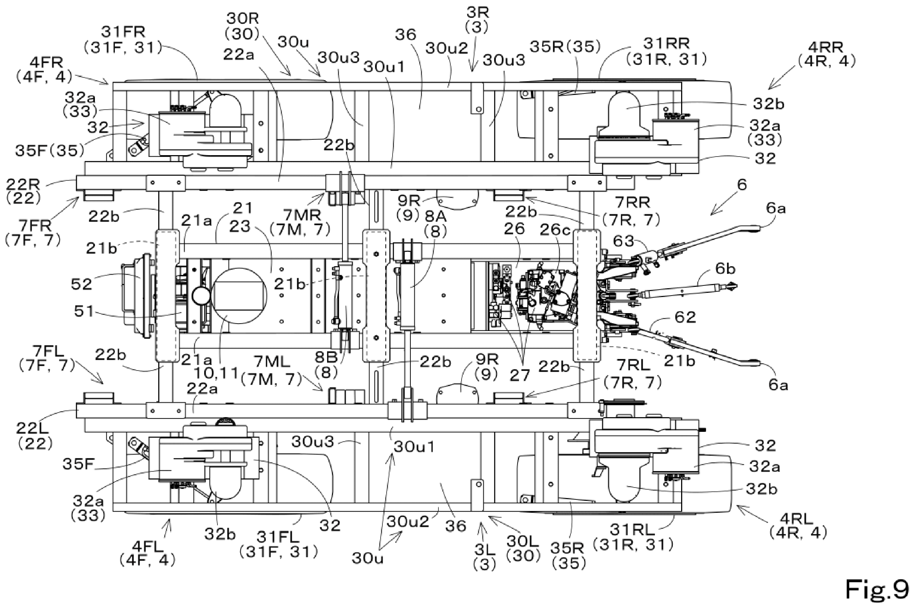

Each vehicle-body side portion frame 22 includes a main bar member 22a extending in the front-rear direction, a lateral bar member 22b (refer to, for example, FIGS. 6 and 9) extending laterally inward from the main bar member 22a, and a plurality of longitudinal bar members 22c extending perpendicularly downward from the main bar member 22a.

Lengths of the plurality of longitudinal bar members 22c in the up-down direction are uniform, and a length in the up-down direction from the upper end of the main bar member 22a to the lower end of the longitudinal bar member 22c substantially coincides to a maximum width (a width in the up-down direction from the upper end of the upper frame 30u to the lower end of the lower frame 30b) of the travel frame 30 of the travel structural body 3 in the up-down direction.

In the present example embodiment, each vehicle-body side portion frame 22 is provided with, as the plurality of longitudinal bar members 22c, five longitudinal bar members 22c, which are longitudinal bar members 22c1, 22c2, 22c3, 22c4, and 22c5, in this order from the front end of the vehicle-body side portion frame 22 toward the rear. Each of the longitudinal bar members 22c is used to support the mast mechanism 7 described below.

Each lateral bar member 22b is inserted into a respective one of the lateral cylinder members 21b of the vehicle-body central frame 21. In the present example embodiment, each vehicle-body side portion frame 22 includes three lateral bar members 22b at a front position, an intermediate position, and a rear position, and, corresponding to this, the vehicle-body central frame 21 also includes three lateral cylinder members 21b at a front position, an intermediate position, and a rear position.

Both the left and right ends of each lateral cylinder member 21b of the vehicle-body central frame 21 are open ends. Each lateral bar member 22b of the left vehicle-body side portion frame 22L is inserted into a respective lateral cylinder member 21b through the left open end of the respective lateral cylinder member 21b, and each lateral bar member 22b of the right vehicle-body side portion frame 22R is inserted into the respective lateral cylinder member 21b through the right open end of the respective lateral cylinder member 21b.

The number and the positions of the lateral bar members 22b of each vehicle-body side portion frame 22 are not limited to those described above, and it is sufficient that at least one lateral bar member 22b is provided at any portion of the vehicle-body side portion frame 22.

Further, it is sufficient that each vehicle-body side portion frame 22 is connected to the vehicle-body central frame 21 to be movable relative to the vehicle-body central frame 21 in the lateral direction, and this connection may be achieved by a structure that differs from a structure in which the lateral bar members 22b of the vehicle-body side portion frame 22 are inserted into the respective lateral cylinder members 21b of the vehicle-body central frame 21 as described above.

As illustrated in FIG. 9, in the vehicle body 2 including the vehicle-body frame structural body 20 having such a structure, the extension amounts (protrusion amounts) of the lateral bar members 22b protruding from the lateral cylinder members 21b are changed to change the interval in the lateral direction between the left vehicle-body side portion frame 22L and the left end of the vehicle-body central frame 21 and/or the interval in the lateral direction between the right vehicle-body side portion frame 22R and the right end of the vehicle-body central frame 21. That is, the width of the vehicle body 2 in the lateral direction is changed to change the shape of the vehicle body 2.

Then, the shape change of the vehicle body 2 in the form of a change in the width in the lateral direction can change the interval in the lateral direction between the left travel structural body 3L and the right travel structural body 3R, that is, the vehicle width, which is the interval between the left front wheel 31FL and the right front wheel 31FR and/or the interval between the left rear wheel 31RL and the right rear wheel 31RR.

As a vehicle-body shape changer (actuator) 80 (refer to FIG. 8) for changing the lateral width of the vehicle body 2, that is, for changing the shape of the vehicle body 2, a pair of width changing cylinders 8A and 8B extending in the lateral direction are provided at an upper portion of the vehicle-body central frame 21. Hereinafter, the pair of width changing cylinders 8A and 8B may each be referred to as the width changing cylinder 8.

The width changing cylinder 8A extends and contracts for changing the interval between the vehicle-body central frame 21 and the left vehicle-body side portion frame 22L. A cylinder body of the width changing cylinder 8A is attached to an upper portion of the vehicle-body central frame 21, a piston rod extends leftward from the cylinder body, and a tip of the piston rod is attached to the main bar member 22a at an upper portion of the left vehicle-body side portion frame 22L.

The width changing cylinder 8B extends and contracts for changing the interval between the vehicle-body central frame 21 and the right vehicle-body side portion frame 22R. A cylinder body of the width changing cylinder 8B is attached, at a position forward or rearward (forward in the present example embodiment) of the cylinder body of the width changing cylinder 8A, to an upper portion of the vehicle-body central frame 21, a piston rod extends rightward from the cylinder body, and a tip of the piston rod is attached to the main bar member 22a at an upper portion of the right vehicle-body side portion frame 22R.

Thus, an extending-contracting movement of each width changing cylinder 8 changes the protrusion amounts of the lateral bar members 22b from the lateral cylinder members 21b and causes the vehicle-body side portion frames 22 to advance or retreat with respect to the vehicle-body central frame 21, and, as described above, the lateral width of the vehicle body 2 is changed to change the shape of the vehicle body 2.

For example, both (piston rods) of the width changing cylinders 8A and 8B are extended to move both the left vehicle-body side portion frame 22L and the right vehicle-body side portion frame 22R, as illustrated in FIG. 9, away from the vehicle-body central frame 21, and the shape of the vehicle body 2 is changed such that both a left portion and a right portion thereof are extended.

In response to this, the left travel structural body 3L connected to the left vehicle-body side portion frame 22L and the right travel structural body 3R connected to the right vehicle-body side portion frame 22R are also moved away from each other in the lateral direction to increase a distance in the lateral direction between the left travel structural body 3L and the right travel structural body 3R and the vehicle width, which is a distance between the left and right wheels 31 corresponding thereto.

With regard to the shape change of the vehicle body 2 in a direction in which the vehicle width increases, it is not necessary to extend/contract both the left vehicle-body side portion frame 22L and the right vehicle-body side portion frame 22R in a synchronized manner, and only one of the left vehicle-body side portion frame 22L and the right vehicle-body side portion frame 22R may be moved by extending/contracting only one of the width changing cylinders 8A and 8B.

The width changing cylinder 8 as a vehicle-body shape changer that changes the lateral width of the vehicle body 2 may be a cylinder having any structure, such as a hydraulic cylinder, an air cylinder, or an electric cylinder, as long as the cylinder functions as the vehicle-body shape changer 80.

The vehicle-body shape changer 80 need not have a structure including a cylinder such as the width changing cylinder 8 as long as the vehicle-body shape changer 80 has a function of changing the lateral width of the vehicle body 2 and may have, for example, a structure in which the vehicle-body side portion frames 22 are advanced and retreated with respect to the vehicle-body central frame 21 by rotating a screw rod by a motor.

A laterally outer end surface of each vehicle-body side portion frame 22 and a laterally inner end surface of the travel frame 30 of the travel structural body 3 on the corresponding side facing the laterally outer end surface are vertical surfaces parallel to each other. That is, each vehicle-body side portion frame 22 on each side does not include a portion that extends laterally outward to reach a location above the upper frame 30u so as to inhibit placement of apparatuses and the like onto the upper frame 30u of the travel frame 30 of each travel structural body 3. Thus, the entire width of the upper frame 30u of the travel frame 30 of each travel structural body 3 in the lateral direction is effectively usable for installation of apparatuses and the like.

For example, all of the lateral bar members 22b of the left vehicle-body side portion frame 22L extend, from the main bar member 22a, laterally inward of the vehicle body 2 on a side opposite to the left travel structural body 3L, and, from the upper end to the lower end, a flat vertical surface is provided at left end surfaces of the plurality of longitudinal bar members 22c (longitudinal bar members 22c1, 22c2, 22c3, 22c4, and 22c5) extending perpendicularly downward from the main bar member 22a of the left vehicle-body side portion frame 22L, that is, at the left (laterally outer) end of the left vehicle-body side portion frame 22L.

a flat vertical surface is also provided, from the upper end to the lower end, at the right end of the left travel frame 30L of the left travel structural body 3L, right end surfaces of the longitudinal bar members 30v1, 30v2, and 30v3 extending perpendicularly downward from the inner main bar member 30u1, that is, at the right (laterally inner) end of the left travel frame 30L.

Thus, the vertical surface of the left (laterally outer) end of the left vehicle-body side portion frame 22L and the vertical surface of the right (laterally inner) end of the left travel frame 30L are parallel to each other, and an interval having a constant lateral width in the front-rear direction is ensured between the two vertical surfaces. Additionally, all apparatuses to be installed at the vehicle body 2 are positioned, without protruding leftward from the left vehicle-body side portion frame 22L and without protruding rightward from the right vehicle-body side portion frame 22R, between the left vehicle-body side portion frame 22L and the right vehicle-body side portion frame 22R. Therefore, the left vehicle-body side portion frame 22L and the left travel frame 30L do not interfere with each other during, for example, vertical movement of the vehicle body 2 with respect to the travel structural body 3, and a free space that is large in the lateral direction can be ensured also at an upper portion of the upper frame 30u of the left travel frame 30L.

The right vehicle-body side portion frame 22R and the right travel frame 30R also have the same structures, an interval having a constant lateral width in the front-rear direction is similarly ensured also between the right (laterally outer) end of the right vehicle-body side portion frame 22R and the left (laterally inner) end of the right travel frame 30R, and, as described above, all apparatuses to be installed at the vehicle body 2 are positioned, without protruding leftward from the left vehicle-body side portion frame 22L and without protruding rightward from the right vehicle-body side portion frame 22R, between the left vehicle-body side portion frame 22L and the right vehicle-body side portion frame 22R. Therefore, the same effect, that is, an effect in which the right vehicle-body side portion frame 22R and the right travel frame 30R do not interfere with each other during, for example, vertical movement of the vehicle body 2 with respect to the right travel frame 30R is exerted.

Since, through the plurality of mast mechanisms 7 each positioned between the vehicle body 2 (each vehicle-body side portion frame 22) and each travel structural body 3 (each travel frame 30), the left vehicle-body side portion frame 22L of the vehicle-body frame structural body 20 is connected to the left travel frame 30L of the left travel structural body 3L and the right vehicle-body side portion frame 22R thereof is connected to the right travel frame 30R of the right travel structural body 3R such that respective relative vertical movement is allowed, the vehicle body 2 as a whole can be moved (raised and lowered) in the up-down direction with respect to the left and right travel structural bodies 3. A configuration of the mast mechanism 7 is described later in detail.

The working vehicle 1 includes, as an actuator (hydraulic actuator) for raising and lowering the vehicle body 2, that is, as a vehicle-body mover 90 (refer to FIG. 8) for moving the vehicle body 2 relative to the left and right travel structural bodies 3, a left-right pair of the vehicle-body raising/lowering cylinders 9, that is, a left vehicle-body raising/lowering cylinder 9L and a right vehicle-body raising/lowering cylinder 9R.

A cylinder bottom, which is an upper end portion, of each of the vehicle-body raising/lowering cylinders 9 (the left vehicle-body raising/lowering cylinder 9L and the right vehicle-body raising/lowering cylinder 9R) is connected to a lower portion of the main bar member 22a of a corresponding one of the vehicle-body side portion frames 22. A piston rod head, which is a lower end portion, of each of the vehicle-body raising/lowering cylinders 9 is supported by a bracket and/or the like to protrude laterally inward (toward the vehicle body 2) from the laterally inner end of the travel frame 30.

That is, in the lateral direction of the working vehicle 1, each vehicle-body raising/lowering cylinder 9 whose upper end is connected to an upper portion of the vehicle-body side portion frame 22 corresponding thereto is positioned at a position that is offset inward in the lateral direction from the laterally inner end of the travel structural body 3. That is, each vehicle-body raising/lowering cylinder 9 does not protrude laterally outward from the corresponding vehicle-body side portion frame 22 such that the vehicle-body raising/lowering cylinder 9 intrudes into, for example, the inside of the travel frame 30 or a space above the travel frame 30. Consequently, a large free space, where various apparatuses can be installed, is also ensured at an upper portion of the upper frame 30u of the travel frame 30 of each travel structural body 3.

At normal times, a piston rod of each of the left vehicle-body raising/lowering cylinder 9L and the right vehicle-body raising/lowering cylinder 9R is contracted, and, as illustrated in, for example, FIGS. 1 to 5, the vehicle body 2 is positioned at the lowest position in its vertical movement region. When the piston rods of the left vehicle-body raising/lowering cylinder 9L and the right vehicle-body raising/lowering cylinder 9R are extended by the same stroke at the same time, the entire vehicle body 2 is raised. Specifically, by the extension movement of the piston rods of the left vehicle-body raising/lowering cylinder 9L and the right vehicle-body raising/lowering cylinder 9R, the vehicle body 2 is moved upward with respect to the left and right travel structural bodies 3 while being guided by the mast mechanisms 7.

It is conceivable to adjust the tilting of the vehicle body 2 in the lateral direction by extending and contracting the left vehicle-body raising/lowering cylinder 9L and the right vehicle-body raising/lowering cylinder 9R differently. For example, when, due to a left-downward inclination of a ground surface, the left travel structural body 3L is lower than the right travel structural body 3R and causes the vehicle body 2 to tilt left-downward, it is conceivable to maintain the vehicle body 2 horizontally in the lateral direction by extending only the left vehicle-body raising/lowering cylinder 9L to move the left portion of the vehicle body 2 upward relative to the left travel structural body 3L.

The vehicle-body raising/lowering cylinder 9 need not be a pair of left and right vehicle-body raising/lowering cylinders, and the number thereof and the position thereof inside the vehicle body 2 are also not limited. The actuator that moves the vehicle body 2 in the up-down direction need not be an extension-contraction actuator such as the vehicle-body raising/lowering cylinder 9 and may be configured to, for example, move the vehicle body 2 in the up-down direction by rotation of an electric motor.

In the present example embodiment, as described above, the width changing cylinder 8, which is the vehicle-body shape changer 80, and the vehicle-body raising/lowering cylinder 9, which is the vehicle-body mover 90, are hydraulic actuators, and extension and contraction movement of each hydraulic actuator is controlled by the controller 15 controlling a corresponding valve of the control valve unit 27.

In FIG. 8, the width changing cylinder 8 represents each of the width changing cylinders 8A and 8B, the vehicle-body raising/lowering cylinder 9 represents each of the vehicle-body raising/lowering cylinders 9L and 9R, and the controller 15 can individually control extension and contraction movement of each of these cylinders.

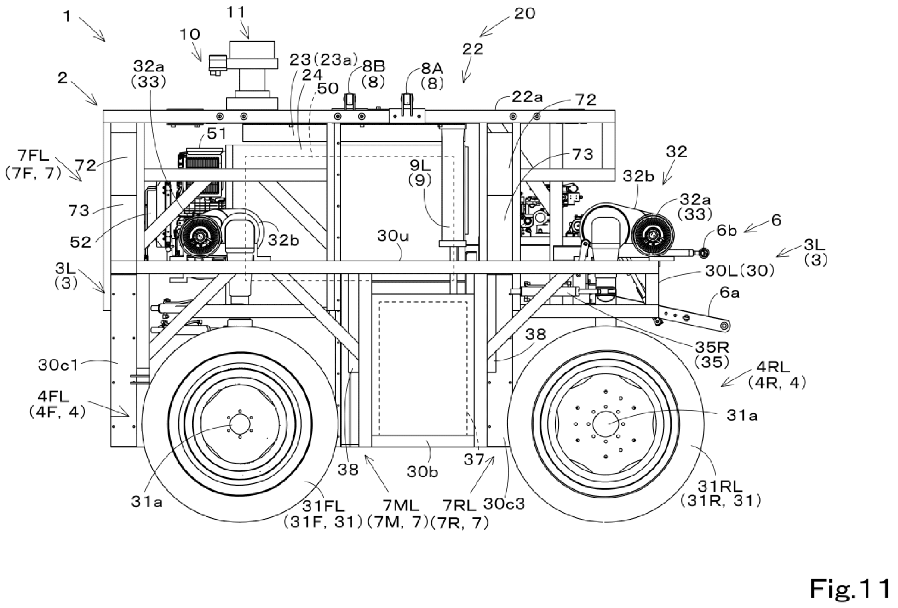

As illustrated in FIGS. 11 to 13, the front body case 24 accommodates the battery (center battery) 50. Considering the weight balance of the battery 50, which is a heavy object, in the entire working vehicle 1, or for other reasons (for example, a relationship with a layout of apparatuses in the vehicle body 2), the front body case 24 is configured to be movable in the front-rear direction relative to the vehicle-body central frame 21 (the vehicle-body frame structural body 20). That is, the shape of the vehicle body 2 is also changed by the front body case 24 moving forward or rearward with respect to the vehicle-body central frame 21.

To move the front body case 24 forward and rearward with respect to the vehicle-body central frame 21, for example, a battery movement actuator 81, which is a hydraulic cylinder, may be provided as the vehicle-body shape changer 80 (refer to FIG. 8). Alternatively, without such a vehicle-body shape changer, a worker may directly push or pull the front body case 24 manually to move the front body case 24 forward or rearward with respect to the vehicle-body central frame 21.

An air temperature adjuster (air conditioner unit) 51 is attached to a front end surface of the front body case 24 so as to protrude forward, and a radiator 52 is provided directly forward of the air temperature adjuster 51. A radiator fan 52a is provided at the front end of the radiator 52. That is, an air cooler and a water cooler are provided directly forward of the front body case 24.

The air temperature adjuster 51 and the radiator fan 52a of the radiator 52 can be actuated by electric power supplied from the battery 50.

As illustrated in FIGS. 5, 12, and 13, at a location rearward of the front body case 24 in which the battery (center battery) 50 is accommodated, a bracket 25 extends downward from the vehicle-body central frame 21. The rear body case (PTO case) 26 extends downward from a lower end portion of the bracket 25.

Thus, the rear body case 26 is positioned rearward of the front body case 24 and is supported by the vehicle-body frame structural body 20 of the vehicle body 2 through the bracket 25.

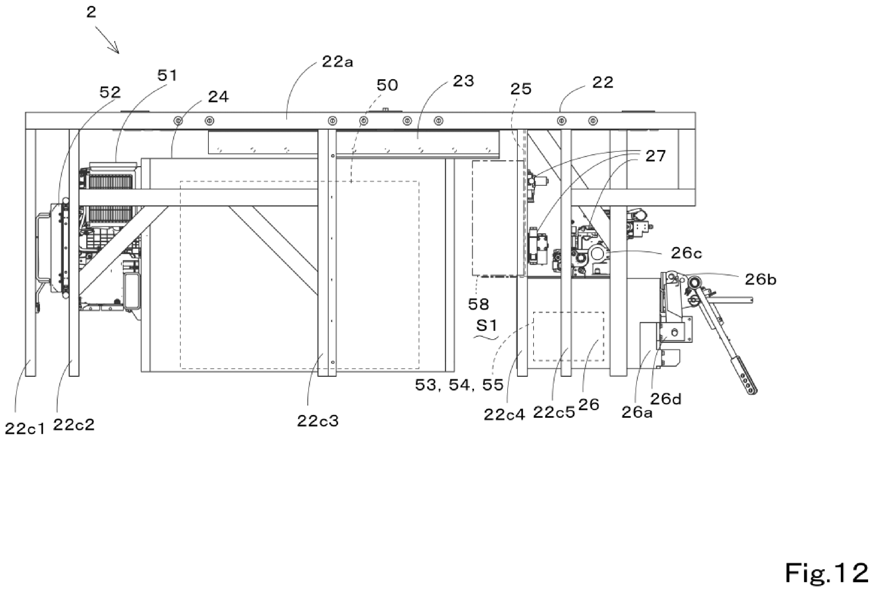

When, as described above, the front body case 24 is moved forward relative to the vehicle-body central frame 21 in consideration of the weight balance and/or the like, a space portion S1 having a certain degree of width in the front-rear direction is generated, as illustrated in FIG. 12, between the rear end of the front body case 24 and the bracket 25 that is provided at a location rearward of the rear end and that is fixed to the vehicle-body central frame 21.

The space portion S1 is described below. That is, it is sufficient to use a structure in which the working vehicle 1 includes the vehicle body 2 movable in the up-down direction, a first apparatus installed at the vehicle body 2, a second apparatus installed at the vehicle body 2, the left and right travel structural bodies 3L and 3R provided on the left side and the right side of the vehicle body 2, respectively, and a moving mechanism that moves the vehicle body 2 in the up-down direction, in which the vehicle body 2 includes the space portion S1 at least between the first apparatus and the second apparatus, and in which, in a state in which the vehicle body 2 is lowered maximally, the moving mechanism causes the space portion S1 to be positioned at least between the first apparatus and the second apparatus and between the left and right travel structural bodies 3L and 3R, and, in a state in which the vehicle body 2 is raised maximally, the moving mechanism causes the space portion S1 to be positioned at least between the first apparatus and the second apparatus and above the left and right travel structural bodies 3L and 3R.

The moving mechanism is the vehicle-body mover 90 described above and, in the present example embodiment, is the vehicle-body raising/lowering cylinders 9L and 9R, which are hydraulic actuators. However, as described above, the moving mechanism is not limited to an extension-contraction hydraulic actuator, and actuators having various configurations can be used as a moving mechanism that is the vehicle-body mover 90.

Although the first apparatus is the battery 50 accommodated in the front body case 24 and the second apparatus is an electrical apparatus (the electric motor 53) or a hydraulic apparatus (the hydraulic pump 55) accommodated in the rear body case 26 in the present example embodiment, these do not imply any limitation, and, for example, the applications thereof as the first apparatus and the second apparatus may be reversed. For example, when a sprayer or the like for a chemical agent or the like is mounted as a working device on the vehicle body 2, the sprayer, a chemical tank, or the like may be the first apparatus or the second apparatus, and types of the apparatuses are not limited.

Additionally, it is conceivable that the vehicle body 2 includes the space portion S1 at a location rearward of the first apparatus installed at a front portion of the vehicle body 2. In this case, only the position of the first apparatus is specified as the front portion of the vehicle body 2, and the position of the second apparatus is not specified. In the case of the working vehicle 1 having the configuration described above, it is conceivable, for example, to provide the space portion S1 at a location rearward of the radiator 52 positioned at the front end of the vehicle body 2 and to position, as the second apparatus, the battery 50, which is accommodated in the front body case 24, at a location rearward of the space portion S1.

It is also conceivable that the vehicle body 2 includes the space portion S1 between the first apparatus and the second apparatus that is installed at a rear portion of the vehicle body 2. In this case, only the position of the second apparatus is specified as the rear portion of the vehicle body 2, and the position of the first apparatus is not specified. In the case of the working vehicle 1 having the above-described configuration, it is conceivable that, for example, a working device installed at an upper portion of the rear end of the rear body case 26 or a coupler for coupling the working device is the second apparatus, the control valve unit 27 forward of the second apparatus and attached to the bracket 25 supporting the rear body case 26 is the first apparatus, and a space above the rear body case 26 and between the first apparatus and the second apparatus is the space portion S1.

It is also conceivable that the vehicle body 2 is configured to be able to change the position of the first apparatus forward or rearward and that the positional change of the first apparatus can switch the vehicle body 2 between a state including the space portion S1 and a state without the space portion S1. In the present example embodiment, as described above, the position of the battery 50 as the first apparatus can be changed forward or rearward. However, this does not imply any limitation, and, for example, by reversing applications as the first apparatus and the second apparatus as described above, an electrical apparatus or a hydraulic apparatus inside the rear body case 26 may be the first apparatus, and the rear body case 26 may be movable forward and rearward so that the state including the space portion S1 and the state without the space portion S1 can be switched.

Although the working vehicle 1 includes, as a device that changes the position of the first apparatus forward and rearward, the battery movement actuator 81 in the present example embodiment on the assumption that the first apparatus is the battery 50, this does not imply any limitation. A configuration of means for moving the first apparatus may be considered according to a type of an apparatus defined as the first apparatus, and, as described above, a configuration in which an actuator is not provided and in which a worker manually moves the first apparatus may be used.

A specific configuration of the space portion S1 is further described.

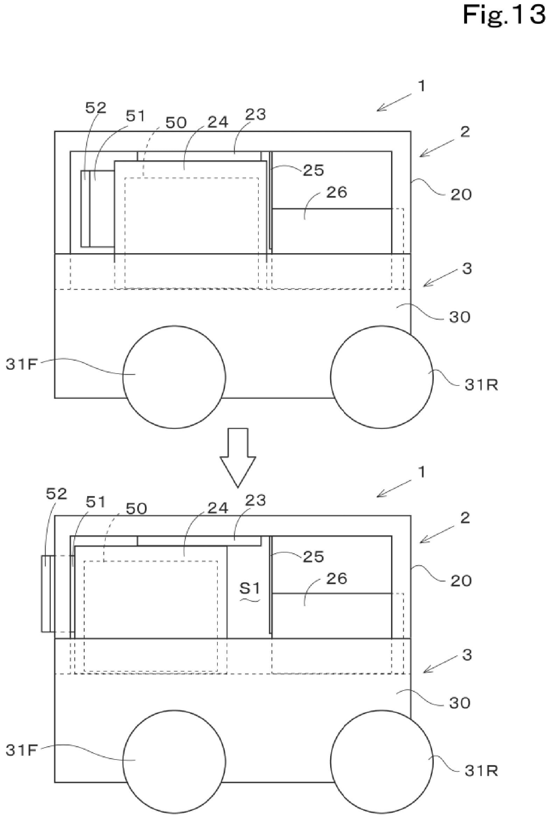

That is, a state in which the space portion S1 is present as illustrated in FIG. 13 between an apparatus such as the battery 50 accommodated in the front body case 24 and an electrical apparatus such as the electric motor 53 (described below) or a hydraulic apparatus such as the hydraulic pump 55 (described below) accommodated in the rear body case 26 and a state in which the space portion S1 is not present therebetween can be switched in the present example embodiment by forward/rearward movement of the front body case 24.

As illustrated in FIGS. 12 and 13, when the space portion S1 is provided by moving the front body case 24 forward together with the battery 50, the space portion S1 can be used to attach, for example, a hydraulic fluid tank 58, which stores hydraulic oil to be supplied to a hydraulic actuator and/or the like, included in the working vehicle 1 to, for example, a front portion of the bracket 25.

In a normal state in which the vehicle body 2 is lowered, the space portion S1 is covered at the left and right thereof by the left travel structural body 3L and the right travel structural body 3R. Additionally, the space portion S1 is covered, at the front thereof, by an apparatus such as the battery 50 accommodated in the front body case 24 and is covered, at the rear thereof, by an apparatus such as a hydraulic apparatus or an electrical apparatus accommodated in the rear body case 26. Due to the space portion S1 being thus covered at the four locations, which are the front, rear, left, and right thereof, protection of apparatuses such as the hydraulic fluid tank 58 inside the space portion S1 can be ensured.

When the vehicle body 2 is raised, the space portion S1 is exposed at a location above the left and right travel structural bodies 3 to be in a state in which the inside of the space portion S1 is accessible by a worker by, for example, inserting the hands of the worker into the space portion S1. Therefore, when the vehicle body 2 is raised, an apparatus such as the hydraulic fluid tank 58 inside the space portion S1 can be removed.

Specifically, the space portion S1 when the vehicle body 2 is raised is in a state in which the travel structural body 3 is not present on either the left or right side of the space portion S1 since, when the vehicle body 2 is raised, the space portion S1 is positioned above the left and right travel structural bodies 3L and 3R while the space portion S1 remains covered at two locations, which are the front and rear thereof, by an apparatus such as the battery 50 accommodated in the front body case 24 and a hydraulic apparatus, an electrical apparatus, or the like accommodated in the rear body case 26. Therefore, the space portion S1 is open on both the left and right sides thereof, that is, in a state of being exposed on both the left and right sides in a laterally through form.

By using the entire space portion S1 as a free space without an apparatus such as the hydraulic fluid tank 58 therein, it is also possible for a worker to perform maintenance and the like of the battery 50 by inserting the hands of the worker into the front body case 24, for example, through the space portion S1.

An allowable range in which movement of the front body case 24, which accommodates the center battery 50, in the front-rear direction with respect to the vehicle-body frame structural body 20 of the vehicle body 2 is allowed is ensured to be sufficiently large. Therefore, with regard to the size of the space portion S1 defined by forward movement of the front body case 24, the space portion S1 that is sufficiently large enough for a worker to perform maintenance work or to place a member such as the hydraulic fluid tank 58 by deeply inserting one hand of the worker into the space portion S1 as described above can be provided, instead of a small space that barely allows insertion of fingertips of one hand of a worker thereinto, by moving the front body case 24 forward by a large amount.

The electric motor 53 and the inverter 54 (refer to FIGS. 8 and 12), defining working prime movers, are accommodated inside the rear body case 26. The PTO shaft 5 is axially supported inside the rear body case 26. As illustrated in FIG. 5, the PTO shaft 5 protrudes rearward from the rear end of the rear body case 26, which is a rear end portion of the vehicle body 2.

The electric motor 53 is driven by obtaining electric power from the center battery 50, and the PTO shaft 5 is driven by the output thereof. The inverter 54 converts direct current from the center battery 50 into alternating current and applies the alternating current with a set voltage and/or frequency to the electric motor 53.

As illustrated in FIG. 8, the controller 15 controls the value of the voltage and/or frequency set in the inverter 54 to control the output rotation speed and/or torque of the electric motor 53, thereby controlling the rotation speed and/or torque of the PTO shaft 5.

A transmission mechanism for transmitting the output of the electric motor 53 to the PTO shaft 5 may be provided inside the rear body case 26. This transmission mechanism may have a structure including a gear, a structure including an endless belt, or another structure. The transmission mechanism also may be a stepped or stepless speed-change mechanism. Further, the transmission mechanism may be provided with a clutch, a braking device, and/or the like.

As illustrated in, for example, FIGS. 5 and 12, a pair of left and right lower link brackets 26a are provided, one at a lower left corner and one at a lower right corner of a rear end portion of the rear body case 26. A top link bracket 26b is provided at a laterally intermediate position on an upper portion of a rear end surface of the rear body case 26.

To mount the coupler 6, which is a three-point linkage, onto the vehicle body 2, front end portions of the left and right lower links 6a are attached to the left and right lower link brackets 26a, and a front end portion of the top link 6b is attached to the top link bracket 26b.

As illustrated in, for example, FIGS. 5 and 6, a lift arm base 26c that rotatably supports a rotary fulcrum shaft extending in the lateral direction is provided at an upper end surface of the rear body case 26, and a pair of left and right lift cylinder brackets 26d are provided at a lower portion of the rear end surface of the rear body case 26.

When the coupler 6, which is a three-point linkage, is mounted on the rear body case 26, front end portions of a pair of left and right lift arms 60 are attached one to the left end and one to the right end of a rotary fulcrum shaft that is supported by the lift arm base 26c. Consequently, the left and right lift arms 60 are pivotally supported by the lift arm base 26c so as to be integrally rotatable.

A lift cylinder 61 is interposed between the left lift arm 60 and the left lift cylinder bracket 26d, and a lift cylinder 61 is interposed between the right lift arm 60 and the right lift cylinder bracket 26d.

The left and right lift cylinders 61 are configured to extend and contract in synchronism, and extension/contraction movement of the left and right lift cylinders 61 causes the left and right lift arms 60 to integrally rotate about the rotary fulcrum shaft at the front end portion.

Further, as illustrated in FIGS. 5 and 6, one of the left and right lift arms 60 is connected to the lower link 6a on a side corresponding thereto through a lift rod 62 having a fixed length, while the other one of the left and right lift arms 60 is connected to the lower link 6a on a side corresponding thereto through an orientation adjusting cylinder 63 that can extend and contract.

With the left and right lower links 6a thus being connected to the left and right lift arms 60 through the lift rod 62 and the orientation adjusting cylinder 63, respectively, rear end portions of the left and right lower links 6a move upward and downward by following rear end portions of the left and right lift arms 60 being vertically moved by extension/contraction movement of the left and right lift cylinders 61. Consequently, the working device 200 that is mounted on rear end portions of the left and right lower links 6a and a rear end portion of the top link 6b at the coupler 6 is vertically moved (raised and lowered).

Additionally, a difference between an interval between a rear end portion of the left lift arm 60 and a rear end portion of the left lower link 6a and an interval between a rear end portion of the right lift arm 60 and a rear end portion of the right lower link 6a is adjusted by extension/contraction movement of the orientation adjusting cylinder 63, and the tilt angle in the lateral direction of the working device 200 mounted on the coupler 6 is thereby adjusted.

Due to this configuration, even when, for example, the working device 200 during agricultural work is tilted laterally due to an inclination of a farm field, the working device 200 is maintained in a horizontal state in the lateral direction by adjusting the interval between each lift arm 60 and each lower link 6a by extension and contraction of the orientation adjusting cylinder 63, and favorable ridges not inclined in the lateral direction can be formed along a mark of work of the working device 200 that is, for example, a ridger.

As described above, the working device 200 can be coupled to the coupler 6 that is mounted at a location rearward of the rear body case 26 (a rear portion of the vehicle body 2). Further, the working device 200 coupled at a location rearward of the vehicle body 2 through the coupler 6 can receive a driving force from the PTO shaft 5 protruding from the rear end surface of the rear body case 26.

Examples of the working device 200 include a device that performs work (agricultural work) related to agriculture, a device that performs work related to civil engineering, a device that performs work related to construction, and a device that performs work related to transportation. However, the working device is not limited to these working devices. In the embodiment described below, the working device 200 is a device that performs agricultural work.

Examples of the working device 200 that performs agricultural work include a spreader that spreads spread materials such as a fertilizer and a chemical agent, a seeder that sows seeds, a cultivator that cultivates the soil, a plowing device (plow) that plows the soil, a weed remover that removes weeds, and an earthing-up device that performs an earthing-up operation. However, it is sufficient for the working device 200 to be a device for performing agricultural work, and the type thereof is not particularly limited.

When the working device 200 is an electric working device, the working device 200 may be driven, instead of being driven by power output from the PTO shaft 5, by electric power output from the battery 50 to the outside of the vehicle body 2 through an electric power line.

The working device 200 may be coupled to the working vehicle 1 in a state in which the working device 200 is positioned on a side or forward of the vehicle body 2. For example, when the working device 200 is positioned forward of the working vehicle 1, the coupler 6 may be mounted on, for example, the front body case 24, and the working device 200 that is thus positioned forward of the working vehicle 1 through the coupler 6 mounted on a front portion of the vehicle body 2 may be connected to the working vehicle 1.

In addition to the PTO shaft 5 provided at a rear portion of the vehicle body 2 or as an alternative to the PTO shaft 5, for example, a front PTO shaft may be provided so as to be oriented forward of the front body case 24, and the working device 200 forward of the working vehicle 1 may be driven by the front PTO shaft. For example, a combine unit that is a combination of a combine harvester, a thresher, a sorter, and the like is conceivable as such a forward-mounting agricultural working device (implement) 200.

The lower link brackets 26a, the top link bracket 26b, and the lift cylinder brackets 26d, which are described above, may be removable from a rear end portion of the rear body case 26 and may be selected in accordance with a configuration of the coupler 6 mounted on the rear body case 26 and be attached to a rear end portion of the rear body case 26.

It is also conceivable to provide an attachment portion, to which the coupler 6 can be attached, at a portion of the vehicle body 2 other than the rear body case 26, for example, at the front body case 24 so that the working device 200 can be coupled, forward of the vehicle body 2, to the working vehicle 1.

For example, when the working device 200 is mounted on a portion other than a portion rearward of the rear body case 26, such as a portion forward of the front body case 24, the above-described brackets 26a, 26b, and 26d and/or the like may be attached to a portion prepared for mounting of the coupler 6 at the position.

Further, the working device 200 may be installed at, for example, an upper portion of the vehicle-body frame structural body 20 of the vehicle body 2 of the working vehicle 1 without the coupler 6 interposed therebetween. In this case, the PTO shaft that transmits a driving force to the working device 200 may be provided so as to have a form protruding upward from an upper portion of the vehicle-body frame structural body 20 (for example, the vehicle-body central frame 21).

As described above, the working vehicle 1 includes the width changing cylinder 8 and the vehicle-body raising/lowering cylinder 9, which are provided at the vehicle body 2, and hydraulic actuators, such as the steering cylinders 35, which are provided at the travel structural bodies 3. The coupler 6 mounted on the vehicle body 2 may include hydraulic actuators, such as the lift cylinders 61 and the orientation adjusting cylinder 63 described above.

In order to control actuation of these hydraulic actuators, as illustrated in FIGS. 5, 6, and 12, one or more control valve units 27 are attached, outside the rear body case 26, to a rear end surface of the bracket 25, an upper end portion of the lift arm base 26c, and/or the like.

Each control valve unit 27 includes a control valve that is incorporated therein and that controls the flow of hydraulic fluid between the hydraulic pump 55 and a hydraulic actuator whose hydraulic pressure is to be controlled by the control valve unit 27. Additionally, each control valve unit 27 is provided with a port for fluid communication of the control valve with the hydraulic pump 55, the hydraulic actuator, and the like through an oil pipe and/or the like.

Control valves that control the hydraulic pressures of different hydraulic actuators may be combined with each other into one control valve unit 27. Additionally, a configuration in which a control valve is provided not only, as described above, outside the rear body case 26 but also inside the rear body case 26 may be used.

Further, for example, when a control valve of the control valve unit 27 is a solenoid valve, the control valve unit 27 may be electrically connected to the controller 15 and/or the like by an electric wire and/or the like.

As an alternative to the battery 50, an internal combustion engine (engine) may be placed, for example, inside the front body case 24, and the above-described hydraulic pump 55 for actuating hydraulic actuators may be driven by output of the engine, and the output of the engine may be transmitted to the PTO shaft 5 to drive the PTO shaft 5.

As described above, the "shape change" of the vehicle body 2 can be performed by the front body case 24 moving in the front-rear direction with respect to the vehicle-body central frame 21 and by the left and right vehicle-body side portion frames 22 moving in the lateral direction with respect to the vehicle-body central frame 21. The width changing cylinder 8 functions as a vehicle-body shape changer (actuator) that changes the shape of the vehicle body 2.

The "movement" of the vehicle body 2 is allowed in the up-down direction relative to the left and right travel structural bodies 3. The vehicle-body raising/lowering cylinder 9 functions as a vehicle-body mover (actuator) that moves the vehicle body 2.

Further, the vehicle body 2 allows mounting of the coupler 6 thereon and is switchable between a state in which the working device 200 is coupled to the vehicle body 2 through the coupler 6 and a state in which the working device 200 is not coupled thereto.

Hereinafter, the "shape change", the "movement", and the "switching between the state in which the working device 200 is coupled to the vehicle body 2 and the state in which the working device 200 is not coupled thereto" of the vehicle body 2 as described above may generally be referred to as the "state change" of the vehicle body 2.

As illustrated in FIG. 8, a device as a whole that is for the state change of the vehicle body 2 and that includes the vehicle-body shape changer 80 including the width changing cylinder 8, the battery movement actuator 81, and the like, the vehicle-body mover 90 including the vehicle-body raising/lowering cylinder 9 and the like, and the coupler 6 capable of coupling the working device 200 to the vehicle body and including the lift cylinder 61 for raising and lowering the working device 200, the orientation adjusting cylinder 63 for adjusting the orientation of the working device 200, and the like is referred to as a vehicle-body state changer 100. The controller 15 controls each device included in the vehicle-body state changer 100.

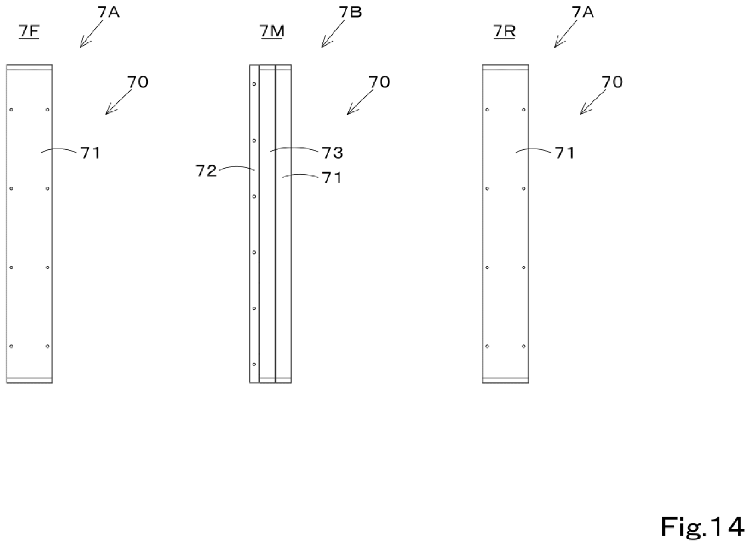

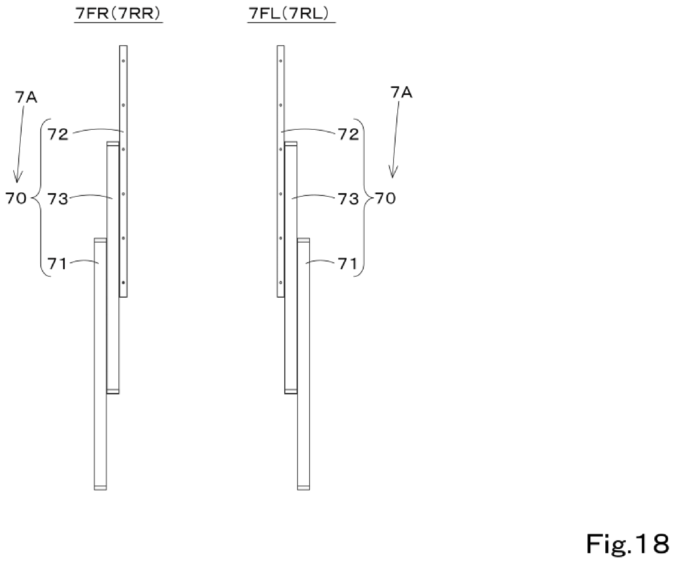

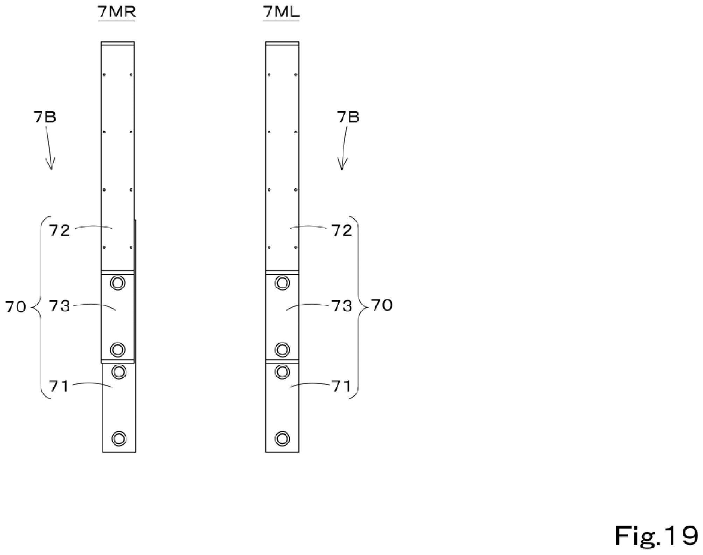

Next, a structure of the mast mechanism 7 that connects the vehicle body 2 to the left and right travel structural bodies 3 is described in detail with reference to, for example, FIGS. 14 to 19.

The left vehicle-body side portion frame 22L is connected to the travel frame 30 of the left travel structural body 3L through a plurality of the mast mechanisms 7, and the right vehicle-body side portion frame 22R is connected to the travel frame 30 of the right travel structural body 3R through a plurality of the mast mechanisms 7.

Each mast mechanism 7 includes a plurality of mast members 70 that are combined so as to be movable relative to each other in the up-down direction, and at least one restrictor 74 that hinders movement of the plurality of mast members 70 relative to each other in the horizontal direction.

The plurality of mast members 70 of each mast mechanism 7 include a travel-side mast member 71, a vehicle-body-side mast member 72, and an intermediate mast member 73. The travel-side mast member 71 is attached (provided to be fixed) to a corresponding mast attachment plate portion 30c (30c1, 30c2, or 30c3) of the travel frame 30 illustrated in, for example, FIG. 7. Each vehicle-body-side mast member 72 is attached (provided to be fixed) to a corresponding one of the longitudinal bar members 22c1 to 22c5 of the vehicle-body side portion frames 22 illustrated in, for example, FIGS. 7 and 12. The intermediate mast member 73 is interposed between the travel-side mast member 71 and the vehicle-body-side mast member 72.

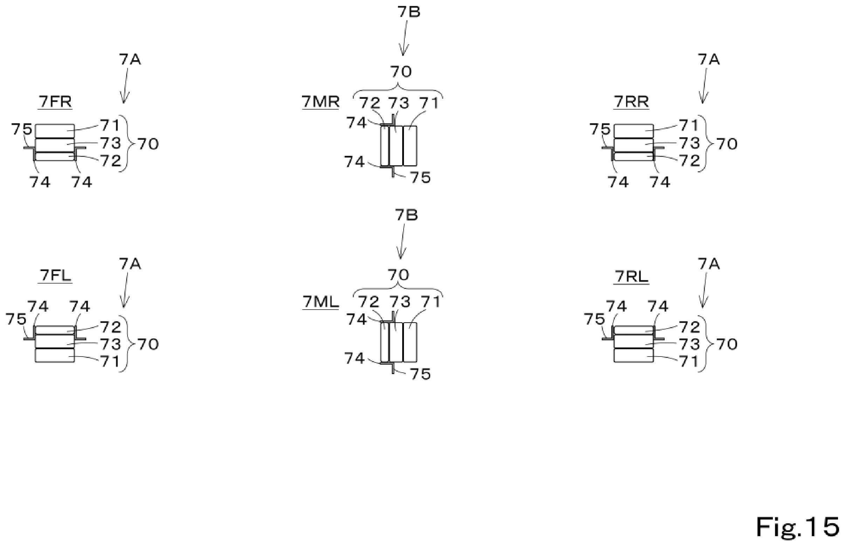

The travel-side mast member 71, the vehicle-body-side mast member 72, and the intermediate mast member 73 are strip-shaped plate members that are long in the up-down direction, and are combined together in a state in which both ends thereof are substantially aligned in one horizontal direction. Here, as illustrated in, for example, FIG. 15, the restrictor 74 of each mast mechanism 7 is a portion or a member having a function that hinders relative movement in the one horizontal direction among the travel-side mast member 71, the vehicle-body-side mast member 72, and the intermediate mast member 73 and that maintains the above-described state in which both ends thereof are aligned.

In the present example embodiment, the longitudinal bar members 22c1 to 22c5 of the vehicle-body side portion frames 22 are each provided with a restricting member 75, and the restricting member 75 is bent in a "C" shape in plan view, and bent portions thereof each defines the restrictor 74. The vehicle-body-side mast member 72 is attached and fixed to each restricting member 75 in a state in which both ends of the vehicle-body-side mast member 72 in the one direction are along a pair of the restrictors 74 defining the at least one restrictor 74. The pair of restrictors 74 define a structure that hinders relative movement of the travel-side mast member 71, the vehicle-body-side mast member 72, and the intermediate mast member 73 in the one horizontal direction.

The at least one restrictor 74 can have any structure, as long as the at least one restrictor 74 has a function that hinders relative movement of the plurality of mast members 70 in the above-described horizontal direction.

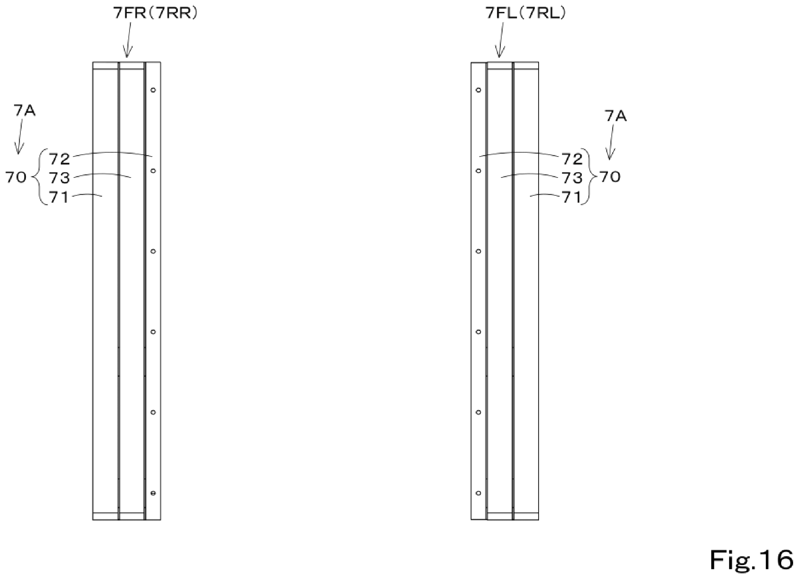

As illustrated in, for example, FIGS. 14 and 16, when the vehicle body 2 is in a normal state (non-raised position), the upper ends and lower ends of all of the travel-side mast member 71, the vehicle-body-side mast member 72, and the intermediate mast member 73 of each mast mechanism 7 are substantially aligned.

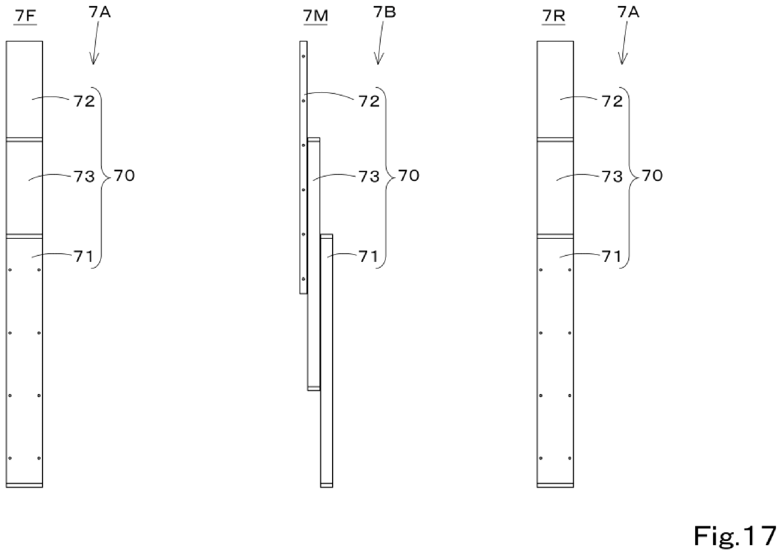

As illustrated in, for example, FIGS. 17 to 19, when the vehicle body 2 is raised, the vehicle-body-side mast member 72 is raised together with the vehicle body 2, and the upper end thereof protrudes upward from the upper end of the travel-side mast member 71. In response to the vehicle-body-side mast member 72 being raised, the upper end of the intermediate mast member 73 protrudes upward from the upper end of the travel-side mast member 71 by a protrusion amount smaller than (for example, half of) the amount of protrusion of the vehicle-body-side mast member 72.

During raising of the vehicle body 2, the pair of restrictors 74 guide the vehicle-body-side mast member 72 and the intermediate mast member 73 to be held in a state in which both ends thereof in the one horizontal direction are aligned with both ends of the travel-side mast member 71. Consequently, even when the vehicle body 2 is moved in the up-down direction with respect to the left and right travel structural bodies 3, the position of the vehicle body 2 is not displaced in the horizontal direction with respect to the left and right travel structural bodies 3, that is, a state of connection between the vehicle body 2 and each of the left and right travel structural bodies 3 so as to be movable relative to each other in the up-down direction is maintained.

The larger the vertical lengths of the plurality of mast members 70, the more the amount of vertical movement of the vehicle body 2 with respect to the left and right travel structural bodies 3 can be increased. That is, the maximum vehicle height, which is the vehicle height of the working vehicle 1 when the vehicle body 2 is raised to a maximum height, can be increased.

When the individual mast member 70 can have a large vertical length, each mast mechanism 7 can be defined, without the intermediate mast member 73, by a combination of only two mast members 70, that is, the travel-side mast member 71 and the vehicle-body-side mast member 72, which are sufficiently long.

However, whereas the vertical length of each mast member 70 substantially corresponds to the vertical lengths of the vehicle body 2 and the travel structural body 3, there are limitations to the vertical lengths of the vehicle body 2 and the travel structural body 3 in terms of dimensional setting. Therefore, there are limitations also to the vertical length of each mast member 70.

Thus, in each mast mechanism 7 according to the present example embodiment, the vertical length of the individual mast member 70 is suppressed to a degree corresponding to the vertical lengths of the vehicle body 2 and the travel structural body 3 by interposing the intermediate mast member 73 between the travel-side mast member 71 and the vehicle-body-side mast member 72, and the working vehicle 1 can have a large maximum vehicle height while the above-described state of connection between the vehicle body 2 and each of the left and right travel structural bodies 3 is maintained without separating the travel-side mast member 71 and the vehicle-body-side mast member 72 from each other, even in a state in which the lower end of the vehicle-body-side mast member 72 is positioned above the upper end of the travel-side mast member 71 since the intermediate mast member 73 is interposed between the travel-side mast member 71 and the vehicle-body-side mast member 72.

Next, with reference to, for example, FIGS. 6, 9, and 14 to 19, a layout of the plurality of mast mechanisms 7 is described.

The working vehicle 1 includes the vehicle body 2 movable in the up-down direction, the travel structural body 3 provided on each side of the vehicle body 2, and the plurality of mast mechanisms 7 each including a first member (the travel-side mast member 71) attached to the travel structural body 3, a second member (the vehicle-body-side mast member 72) attached to the vehicle body 2 and capable of raising and lowering the vehicle body 2 by moving along the first member (the travel-side mast member 71) in the up-down direction, and the restrictors 74 that restrict movement of the second member (the vehicle-body-side mast member 72) in a restriction direction intersecting the up-down direction. The plurality of mast mechanisms 7 include a first mast mechanism 7A and a second mast mechanism 7B that are attached to the travel structural body 3 and the vehicle body 2 such that the restriction direction for restriction by the restrictors 74 of the first mast mechanism 7A and the restriction direction for restriction by the restrictors 74 of the second mast mechanism 7B differ from each other.

That is, the number of the plurality of mast mechanisms 7 is not limited as long as the vehicle body 2 and the travel structural body 3 are coupled by a plurality of the mast mechanisms 7, and the plurality of mast mechanisms 7 include the first mast mechanism 7A and the second mast mechanism 7B that differ from each other in terms of the restriction directions for restriction by the respective restrictors 74 thereof. Additionally, respective restriction directions for the first mast mechanism 7A and the second mast mechanism 7B may be any directions. For example, the restriction direction for the first mast mechanism 7A may be a certain oblique direction with the restriction direction for the second mast mechanism 7B being an oblique direction differing from the mentioned restriction direction for the first mast mechanism 7A by 90 degrees. An angular difference between the restriction direction for the first mast mechanism 7A and the restriction direction for the second mast mechanism 7B is not limited to 90 degrees and may be any angular difference, as long as the respective restriction directions differ from each other.

Materials, shapes, and sizes, and the like of the first member and the second member need not be those of strip-shaped plate members, such as the travel-side mast member 71 and the vehicle-body-side mast member 72, and may be any materials, shapes, and sizes that are suitable for the second member to be vertically movable as described above and suitable for movement thereof to be restricted by the restrictor.

The pair of restrictors 74 are included in the restricting member 75 having a pair of bent portions positioned facing each other in the restriction direction so as to be configured as the at least one restrictor 74 in the present example embodiment. However, the configuration of the at least one restrictor 74 is not limited to such a configuration and may be any configuration as long as the configuration can restrict movement of the second member (the vehicle-body-side mast member 72) in the restriction direction while the second member (the vehicle-body-side mast member 72) attached to the vehicle body 2 is movable in the up-down direction with respect to the first member (the travel-side mast member 71).

In the present example embodiment, the first mast mechanism 7A is attached to the travel structural body 3 and the vehicle body 2 such that its restrictors 74 restrict movement of the second member (the vehicle-body-side mast member 72) in the front-rear direction, and the second mast mechanism 7B is attached to the travel structural body 3 and the vehicle body 2 such that its restrictors 74 restrict movement of the second member (the vehicle-body-side mast member 72) in the lateral direction.

In the present example embodiment, the vehicle body 2 is provided on each of the left side and the right side thereof with the plurality of mast mechanisms 7 including the first mast mechanism 7A and the second mast mechanism 7B that are arrayed in the front-rear direction. Further, the vehicle body 2 is provided on the left side or the right side thereof with the plurality of mast mechanisms 7 including the first mast mechanism 7A and the second mast mechanism 7B at a front portion thereof, a rear portion thereof, and a front-rear intermediate portion thereof between the front portion and the rear portion. Further, the vehicle body 2 is provided on each of the left side and the right side thereof with the plurality of mast mechanisms including the first mast mechanism 7A and the second mast mechanism 7B at a front portion thereof, a rear portion thereof, and a front-rear intermediate portion thereof between the front portion and the rear portion on each of the left side and the right side of the vehicle body 2. Further, the first mast mechanism 7A is provided at each of the front portion and the rear portion, and the second mast mechanism 7B is provided at the front-rear intermediate portion.

That is, in the present example embodiment, among the plurality of mast mechanisms 7 including a front mast mechanism 7F, a middle mast mechanism 7M, and a rear mast mechanism 7R, the first mast mechanism 7A whose restriction direction is the front-rear direction includes the front mast mechanism 7F and the rear mast mechanism 7R, and the second mast mechanism 7B whose restriction direction is the lateral direction includes the middle mast mechanism 7M.

Among the plurality of mast mechanisms 7 on the left side and the plurality of mast mechanisms 7 on the right side, the mast mechanism 7 on the left side and the mast mechanism 7 on the right side that are arranged at positions coinciding to each other in the front-rear direction of the working vehicle 1 are unified into either one of the first mast mechanism 7A and the second mast mechanism 7B.

As long as the respective restriction directions for restriction by the left and right mast mechanisms 7 arranged at positions coinciding to each other in the front-rear direction are unified, the respective restriction directions may be unified into any directions.

A specific configuration related to the layout of the mast mechanisms 7 in the present example embodiment is described below in detail.

In the working vehicle 1 according to the present example embodiment, the vehicle body 2 is provided on each of the left side and the right side thereof with the front, middle, and rear three mast mechanisms 7 between the corresponding vehicle-body side portion frame 22 and the corresponding travel frame 30.

Hereinafter, the front, middle, and rear mast mechanisms 7 between the corresponding vehicle-body side portion frame 22 and the corresponding travel frame 30 on each of the left and right sides may be referred to as the front mast mechanism 7F, the middle mast mechanism 7M, and the rear mast mechanism 7R, respectively.

Further, hereinafter, the front, middle, and rear mast mechanisms 7 between the left vehicle-body side portion frame 22L and the left travel frame 30L may be referred to as a front left mast mechanism 7FL, a middle left mast mechanism 7ML, and a rear left mast mechanism 7RL, respectively, and the front, middle, and rear mast mechanisms 7 between the right vehicle-body side portion frame 22R and the right travel frame 30R may be referred to as a front right mast mechanism 7FR, a middle right mast mechanism 7MR, and a rear right mast mechanism 7RR, respectively.

In each mast mechanism 7, movement of the mast members 70 in the horizontal direction, in which the pair restrictors 74 face each other, is restricted. The horizontal direction in which movement of the mast members 70 is restricted is referred to as the restriction direction. The front mast mechanism 7F, the middle mast mechanism 7M, and the rear mast mechanism 7R between the corresponding vehicle-body side portion frame 22 and the corresponding travel frame 30 on each of the left and right sides include at least two mast mechanisms 7 that differ from each other in terms of their respective restriction directions.

In the present example embodiment, the front mast mechanism 7F, the middle mast mechanism 7M, and the rear mast mechanism 7R between the corresponding vehicle-body side portion frame 22 and the corresponding travel frame 30 on each of the left and right sides include the first mast mechanism 7A whose restriction direction is the front-rear direction and the second mast mechanism 7B whose restriction direction is the lateral direction.

In other words, the first mast mechanism 7A is the mast mechanism 7 that is attached to the vehicle-body side portion frame 22 and the travel frame 30 in a state in which short sides of rectangular surfaces of the mast members 70, which are tabular members, are positioned along the front-rear directions of the vehicle body 2 and the travel structural body 3, and the second mast mechanism 7B is the mast mechanism 7 that is attached to the vehicle-body side portion frame 22 and the travel frame 30 in a state in which the short sides are positioned along the lateral directions of the vehicle body 2 and the travel structural body 3.

Specifically, in the present example embodiment, the first mast mechanism 7A in which the front-rear direction is the direction of restriction includes the front mast mechanism 7F and the rear mast mechanism 7R, and the second mast mechanism 7B in which the lateral direction is the direction of restriction includes the middle mast mechanism 7M.

Here, a specific structure for attaching each mast mechanism 7 to the vehicle body 2 and the travel structural body 3 is described. First, as described above, the longitudinal bar members 30v1, 30v2, and 30v3 at the laterally inner end of each travel frame 30 and the longitudinal bar members 22c1, 22c2, 22c3, 22c4, and 22c5 of each vehicle-body side portion frame 22 at the laterally outer end of the vehicle body 2 are used to support the mast mechanism 7.

In the front-rear direction, the position of the longitudinal bar member 22c2 and the position of the longitudinal bar member 30v1 substantially coincide to each other, and the longitudinal bar member 22c1 is positioned forward of the longitudinal bar member 22c2 due to a width of the mast mechanism 7 in the direction of restriction. In the front-rear direction, the position of the longitudinal bar member 22c3 and the position of the longitudinal bar member 30v2 substantially coincide to each other. Additionally, in the front-rear direction, the position of the longitudinal bar member 22c4 and the position of the longitudinal bar member 30v3 substantially coincide to each other, and the longitudinal bar member 22c5 is positioned rearward of the longitudinal bar member 22c4 due to a width of the mast mechanism 7 in the direction of restriction.

The front mast mechanism 7F is the first mast mechanism 7A in which the front-rear direction is the direction of restriction. The travel-side mast member 71 of the front mast mechanism 7F is attached and fixed to a laterally inner side surface of the mast attachment plate 30c1 provided so as to extend forward from the laterally inner front end of the longitudinal bar member 30v1.

The vehicle-body-side mast member 72 of the front mast mechanism 7F is attached to the restricting member 75 provided to be fixed to the longitudinal bar member 22c1 and the longitudinal bar member 22c2, and the front end edge and the rear end edge of the vehicle-body-side mast member 72 are positioned along the restrictors 74 at the front end and the rear end of the restricting member 75 to be in a state in which forward and rearward movement of the vehicle-body-side mast member 72 is restricted. The intermediate mast member 73 is positioned to be interposed between the travel-side mast member 71 and the vehicle-body-side mast member 72 at the left and right thereof.

In the front mast mechanism 7F as the first mast mechanism 7A defined, as described above, by the mast members 70 attached to the travel frame 30 and the vehicle-body side portion frame 22, the restrictors 74 are provided at the front end edge and the rear end edge of each mast member 70 so as to extend in the lateral direction.

The middle mast mechanism 7M is the second mast mechanism 7B in which the lateral direction is the direction of restriction. The travel-side mast member 71 of the middle mast mechanism 7M is attached and fixed to a front side surface of the mast attachment plate 30c2 provided so as to extend laterally inward from the laterally inner end of the longitudinal bar member 30v2.

The vehicle-body-side mast member 72 is attached to the restricting member 75 that is provided to be fixed to the longitudinal bar member 22c3, and the left end edge and the right end edge of the vehicle-body-side mast member 72 are positioned along the restrictors 74 at the left end and the right end of the restricting member 75 to be in a state in which lateral movement of the vehicle-body-side mast member 72 is restricted. The intermediate mast member 73 is positioned to be interposed between the travel-side mast member 71 and the vehicle-body-side mast member 72 at the front and rear thereof.

In the middle mast mechanism 7M as the second mast mechanism 7B that is defined, as described above, by the mast members 70 attached to the travel frame 30 and the vehicle-body side portion frame 22, the restrictors 74 are provided at the left end edge and the right end edge of each mast member 70 so as to extend in the front-rear direction.

The rear mast mechanism 7R is the first mast mechanism 7A in which the front-rear direction is the direction of restriction. The travel-side mast member 71 of the rear mast mechanism 7R is attached and fixed to a laterally inner side surface of the mast attachment plate 30c3 provided so as to extend rearward from the laterally inner rear end of the longitudinal bar member 30v3.

The vehicle-body-side mast member 72 of the rear mast mechanism 7R is attached to the restricting member 75 provided to be fixed to the longitudinal bar member 22c4 and the longitudinal bar member 22c5, and the front end edge and the rear end edge of the vehicle-body-side mast member 72 are positioned along the restrictors 74 at the front end and the rear end of the restricting member 75 to be in a state in which forward and rearward movement of the vehicle-body-side mast member 72 is restricted. The intermediate mast member 73 is positioned to be interposed between the travel-side mast member 71 and the vehicle-body-side mast member 72 at the left and right thereof.

In the rear mast mechanism 7R as the first mast mechanism 7A that is defined, as described above, by the mast members 70 attached to the travel frame 30 and the vehicle-body side portion frame 22, the restrictors 74 are provided at the front end edge and the rear end edge of each mast member 70 so as to extend in the lateral direction.

Each mast mechanism 7 is a structure having high rigidity in its restriction direction. That is, the first mast mechanism 7A has sufficient rigidity against a load in the front-rear direction strongly applied during, for example, acceleration or deceleration of the working vehicle 1, and the second mast mechanism 7B has sufficient rigidity against a load in the lateral direction strongly applied during, for example, turning of the working vehicle 1.

Therefore, due to a combination use of the first mast mechanism 7A whose restriction direction is the front-rear direction and the second mast mechanism 7B whose restriction direction is the lateral direction, the front mast mechanism 7F, the middle mast mechanism 7M, and the rear mast mechanism 7R that are arrayed in a row in the front-rear direction have rigidity that can resist a load in the front-rear direction and a load in the lateral direction applied to the working vehicle 1.

As illustrated in FIGS. 15, 16, 18, and 19, in the present example embodiment, the front left mast mechanism 7FL and the front right mast mechanism 7FR are each the first mast mechanism 7A, the rear left mast mechanism 7RL and the rear right mast mechanism 7RR are each the first mast mechanism 7A, and the middle left mast mechanism 7ML and the middle right mast mechanism 7MR are each the second mast mechanism 7B.

That is, the left and right mast mechanisms 7 at positions coinciding to each other in the front-rear direction are unified into one of the first mast mechanism 7A or the second mast mechanism 7B. Consequently, distortion stress and the like due to a difference in directions of rigidity between the left and right mast mechanisms 7 are prevented or reduced.

In the lateral direction of the working vehicle 1, the front mast mechanism 7F, the middle mast mechanism 7M, and the rear mast mechanism 7R that are arranged in the front-rear direction are all positioned between the laterally outer end of the vehicle body 2 and the laterally inner end of each travel structural body 3 (the travel frame 30).

That is, none of the mast mechanisms 7 include a portion that intrudes into the vehicle body 2 nor a portion that intrudes into the travel structural body 3, and all of the mast mechanisms 7 are interposed between the vehicle body 2 and the travel structural body 3, specifically, between the corresponding travel frame 30 and the corresponding vehicle-body side portion frame 22. Consequently, at an upper portion of the upper frame 30u of the travel frame 30 of the travel structural body 3, a free space that is large in the lateral direction can be ensured for installation of various apparatuses.

The above-described positions of the front mast mechanism 7F, the middle mast mechanism 7M, and the rear mast mechanism 7R in the front-rear direction are examples, and the positions thereof are not limited thereto. Further, the plurality of mast mechanisms 7 arrayed in a row in the front-rear direction between the corresponding vehicle-body side portion frame 22 and the corresponding travel frame 30 on each of the left and right sides are not limited to the three mast mechanisms, which are the front, middle, and rear mast mechanisms, and may be, for example, front and rear two mast mechanisms or four or more mast mechanisms.

The respective restriction directions for restriction by the mast mechanisms 7 are not limited to only the front-rear direction and the lateral direction described above. For example, the respective restriction directions may be directions oblique to the front-rear direction or to the lateral direction.

Next, with reference to, for example, FIGS. 2, 3, and 6, a layout of the front wheel 31F and the rear wheel 31R in the front-rear direction of the travel structural body 3, and positional relationships thereof with respect to the vehicle body 2 are described.

The working vehicle 1 includes the travel structural body 3 provided on each of the left side and the right side of the vehicle body 2, and each travel structural body 3 includes a first wheel 31, a second wheel 31 forward or rearward of the first wheel 31, and the travel frame 30 that supports the axle 31a of the first wheel 31 and the axle 31a of the second wheel 31, and the travel frame 30 supports the axle 31a of the first wheel 31 and the axle 31a of the second wheel 31 at positions offset toward one of the front or the rear of the travel frame 30.

In this configuration, either one of the front wheel 31F and the rear wheel 31R that are positioned at the front and the rear in each travel structural body 3 may be the first wheel 31 or the second wheel 31. The axle 31a of the front wheel 31F and the axle 31a of the rear wheel 31R are each supported at a position offset toward the rear of the travel frame 30 in the present example embodiment. However, this does not imply any limitation, and the axle 31a of the front wheel 31F and the axle 31a of the rear wheel 31R may be supported at positions offset toward the front of the travel frame 30.

A center portion (a portion at a front-rear intermediate position M) between the front end and the rear end of the travel frame 30 is positioned between the first wheel 31 and the second wheel 31, and a distance from the center portion (a portion at the front-rear intermediate position M) of the travel frame 30 to the axle 31a of the first wheel 31 is smaller than a distance from the center portion (a portion at the front-rear intermediate position M) of the travel frame 30 to the axle 31a of the second wheel 31.

The present example embodiment uses a configuration in which the front wheel 31F is the first wheel 31 and the rear wheel 31R is the second wheel 31 and in which, in the front-rear direction, a distance D1 from the front-rear intermediate position M between the front wheel 31F and the rear wheel 31R to a position A1 of the axle 31a of the front wheel 31F is smaller than a distance D2 from the front-rear intermediate position M to a position A2 of the axle 31a of the rear wheel 31R. However, this does not imply any limitation. For example, it may be configured such that the rear wheel 31R is the first wheel 31, the front wheel 31F is the second wheel 31, and a distance from the front-rear intermediate position M to the axle 31a of the rear wheel 31R is smaller than a distance from the front-rear intermediate position M to the axle 31a of the front wheel 31F.

One of the front end and the rear end of the travel frame 30 closer to the first wheel 31 is a first end, the other one closer to the second wheel 31 is a second end, and a distance from the axle 31a of the second wheel 31 to the second end is smaller than a distance from the axle 31a of the first wheel 31 to the first end.

The present example embodiment uses a configuration in which the front wheel 31F is the first wheel 31 and the rear wheel 31R is the second wheel 31 and in which, in the front-rear direction, a distance D3 from the axle 31a of the rear wheel 31R to the rear end of the travel frame 30 is smaller than a distance D4 from the axle 31a of the front wheel 31F to the front end of the travel frame 30. However, this does not imply any limitation. For example, it may be configured such that the rear wheel 31R is the first wheel 31, the front wheel 31F is the second wheel 31, and a distance from the axle 31a of the front wheel 31F to the front end of the travel frame 30 is smaller than a distance from the axle 31a of the rear wheel 31R to the rear end of the travel frame 30.

The second wheel 31 protrudes forward or rearward from the second end of the travel frame 30, and, at a location forward or rearward of the vehicle body 2, a mounting region S2 is provided between the left and right second wheels 31.

The mounting region S2 is a region provided when the coupler 6 for coupling the working device 200 to the vehicle body 2 is mounted on the vehicle body 2.

In the present example embodiment, the front wheel 31F is the first wheel 31, the rear wheel 31R is the second wheel 31, the rear wheel 31R protrudes rearward from the rear end of the travel frame 30, and, at a location rearward of the vehicle body 2 (the rear body case 26), the mounting region S2 is provided between the left and right rear wheels 31R. However, this does not imply any limitation.

For example, it may be configured such that the rear wheel 31R is the first wheel 31, the front wheel 31F is the second wheel 31, the front wheel 31F protrudes forward from the front end of the travel frame 30, and, at a location forward of the vehicle body 2, the mounting region S2 is provided between the left and right front wheels 31F.

The vehicle body 2 is movable to a position above the travel structural body 3, and, when the vehicle body 2 is lowered, the vehicle body 2 is positioned to be interposed between the left and right travel structural bodies 3L and 3R, and the mounting region S2 is provided between the left and right second wheels 31.

In the present example embodiment, the front wheel 31F is the first wheel 31, the rear wheel 31R is the second wheel 31, and, when the vehicle body 2 is lowered, the mounting region S2 is provided between the left and right rear wheels 31R. However, this does not imply any limitation. For example, it may be configured such that the rear wheel 31R is the first wheel 31, the front wheel 31F is the second wheel 31, and, when the vehicle body 2 is lowered, the mounting region S2 is provided between the left and right front wheels 31F.

One of the front end and the rear end of the vehicle body 2 corresponding to the first end of the travel frame 30 is a third end, the other one corresponding to the second end of the travel frame 30 is a fourth end, and the fourth end of the vehicle body 2 is positioned closer to the third end than the axles 31a of the left and right second wheels 31. The coupler 6 for coupling the working device 200 to the vehicle body 2 is positioned within the mounting region S2 and is mounted on the fourth end of the vehicle body 2.

In the present example embodiment, the first end of the travel frame 30 is the front end of the travel frame 30, and the third end of the vehicle body 2 corresponding thereto is the front end of the vehicle body 2. The second end of the travel frame 30 is the rear end of the travel frame 30, and the fourth end of the vehicle body 2 corresponding thereto is the rear end of the vehicle body 2. That is, the front wheel 31F is the first wheel 31, the rear wheel 31R is the second wheel 31, the rear end of the vehicle body 2 (the rear body case 26) is positioned closer to the front end than the axles 31a of the left and right rear wheels 31R, and the coupler 6 is mounted on the rear end of the vehicle body 2 within the mounting region S2 rearward of the vehicle body 2.

However, the configuration described above is not limited thereto. For example, it may be configured such that the rear wheel 31R is the first wheel 31, the front wheel 31F is the second wheel 31, the front end of the vehicle body 2 is positioned closer to the rear end than the axles 31a of the left and right front wheels 31F, and the coupler 6 is mounted on the front end of the vehicle body 2 within the mounting region S2 forward of the vehicle body 2.

The above configuration is described below specifically with reference to, for example, FIGS. 2, 3, and 6.

The travel frame 30 of each travel structural body 3 is not configured to be symmetrical in the front-rear direction with respect to the front wheel 31F and the rear wheel 31R, and the front wheel 31F and the rear wheel 31R are positioned offset toward the rear at the travel frame 30.

The front-rear intermediate position M between the front end and the rear end of the travel frame 30, that is, a position where the distance from the front end of the travel frame 30 and the distance from the rear end thereof are equal to each other is present between the front wheel 31F and the rear wheel 31R in the front-rear direction.

Here, due to the front wheel 31F and the rear wheel 31R being positioned, as described above, offset toward the rear at the travel frame 30, the distance D1 from the front-rear intermediate position M to the position A1 of the axle 31a of the front wheel 31F forward of the front-rear intermediate position M is, as illustrated in FIGS. 2 and 3, smaller in the front-rear direction than the distance D2 from the front-rear intermediate position M to the position A2 of the axle 31a of the rear wheel 31R rearward of the front-rear intermediate position M.

Further, due to the front wheel 31F and the rear wheel 31R being positioned, as described above, offset toward the rear, the distance D3 between a position E2 of the rear end of the travel frame 30 and the position A2 of the axle 31a of the rear wheel 31R is smaller in the front-rear direction than the distance D4 between a position E1 of the front end of the travel frame 30 and the position A1 of the axle 31a of the front wheel 31F, and, in the present example embodiment, the rear end of the rear wheel 31R protrudes rearward from the rear end of the travel frame 30. Further, in the present example embodiment, the axle 31a of the rear wheel 31R is positioned forward of the rear end of the travel frame 30 and rearward of the rear end of the rear body case 26.

In relation to the above positioning of the front wheel 31F and the rear wheel 31R offset toward the rear at the travel frame 30, the rear body case 26 positioned at a rear portion of the vehicle body 2 is offset toward the front with respect to the rear wheel 31R of the travel structural body 3 in the front-rear direction, and, in the present example embodiment, the rear end of the rear body case 26 is positioned forward of the axle 31a of the rear wheel 31R. In the front-rear direction, the rear end of the rear body case 26 and the axle 31a of the rear wheel 31R may be at substantially identical positions.

As illustrated in, for example, FIG. 5, the brackets 26a and 26b for mounting the coupler 6 are provided, as described above, at a rear end portion of the rear body case 26, and, as illustrated in FIG. 6, a space (region) rearward of the rear body case 26 defines the mounting region S2 for positioning of the coupler 6 mounted on the rear end portion of the rear body case 26, that is, for mounting of the working device 200 onto the vehicle body 2.

In a normal state, the vehicle body 2 is lowered and, as illustrated in FIGS. 2 and 3, is in a state of being interposed between the left and right travel structural bodies 3. In this state, the mounting region S2 rearward of the rear body case 26 is ensured between the axle 31a of the left rear wheel 31RL and the axle 31a of the right rear wheel 31RR.

That is, although a small region of a front portion of the mounting region S2 rearward of the rear body case 26 has a lateral width that is slightly decreased by being interposed between the left and right travel frames 30L and 30R, a large lateral width corresponding to the vehicle width between the rear wheels 31R is ensured in the mounting region S2 since a large portion of the mounting region S2 is interposed between the left and right rear wheels 31RL and 31RR protruding rearward from the rear end of the travel frame 30. That is, the mounting region S2 is a space that widens rearward to be a favorable positioning space for the coupler 6 having a three-point linkage structure.

Since the mounting region S2 is interposed between (covered by) the left rear wheel 31RL and the right rear wheel 31RR in a range that is large in the front-rear direction, a large portion of the coupler 6 positioned within the mounting region S2 is also positioned between the left rear wheel 31RL and the right rear wheel 31RR in the front-rear direction. That is, as illustrated in FIGS. 2 and 3, when viewed from a side, a large portion of the coupler 6 is covered by the rear wheel 31R, and protection thereof can be ensured.

For example, by being configured such that the coupler 6 can be mounted on, for example, the front body case 24, the working vehicle 1 can have a structure in which a coupler for a working device is mounted forward of the vehicle body 2.

In this case, it is conceivable to support the front wheel 31F and the rear wheel 31R so as to be offset toward the front at the travel frame 30 so that a large portion of the coupler 6 positioned forward of the vehicle body 2 can be covered by the left and right front wheels 31F.

That is, in this case, it is conceivable to reverse, for example, the above-described positional relationship between the front-rear intermediate position M of the travel frame 30 and the axle 31a of each of the front wheel 31F and the rear wheel 31R.

Next, a configuration of a control system of the working vehicle 1 is described with reference to FIG. 8. As illustrated in FIG. 8, the working vehicle 1 includes a position detector 11. The position detector 11 can detect a position (measured position information including latitude and longitude) of the vehicle body 2 through a satellite positioning system (a positioning satellite), such as D-GPS, GPS, GLONASS, BeiDou, Galileo, or Quasi-Zenith. That is, the position detector 11 receives a satellite signal (the position of the positioning satellites, transmission time, correction information and/or the like) transmitted from the positioning satellite, and detects the position (for example, the latitude and longitude) of the vehicle body 2 based on the satellite signal.

The position detector 11 includes a receiver 12 and an inertial measurement unit (IMU) 13. The receiver 12 is a unit that includes an antenna and/or the like to receive a satellite signal transmitted from the positioning satellite and is attached to the vehicle body 2. The inertial measurement unit 13 includes an acceleration sensor that detects acceleration, a gyroscope sensor that detects angular speed, and/or the like. The inertial measurement unit 13 is attached to the vehicle body 2. The inertial measurement unit 13 can detect a roll angle, a pitch angle, a yaw angle, and/or the like of the vehicle body 2. A plurality of the position detectors 11 may be set to detect the yaw angle.

As illustrated in FIG. 8, the working vehicle 1 includes a communication device 14. The communication device 14 includes a communication circuit for performing communication through an in-vehicle network, and a wireless communication circuit for performing wireless communication. The wireless communication circuit can communicate wirelessly directly or indirectly with an external device through Wi-Fi (Wireless Fidelity, registered trademark), which is a communication standard compliant with the IEEE 802.11 series, BLE (Bluetooth (registered trademark) Low Energy), LPWA (Low-Power Wide-Area Network), or the like.

In another example, the communication device 14 may be provided with a communication circuit that can communicate with an external device wirelessly through, for example, a cellular communication network, a data communication network, and/or the like. The external device is, for example, a personal computer, a smartphone, a tablet computer, a PDA, a server, or the like.

As illustrated in, for example, FIG. 1, the working vehicle 1 includes at least one situation detector 10. As illustrated in, for example, FIG. 9, the working vehicle 1 according to the present example embodiment is installed at an upper surface of the tabular portion 23a of the support member 23, which is attached to a lower surface of the vehicle-body central frame 21 to support the front body case 24, and is provided upright so as to protrude upward from the upper end of the vehicle-body central frame 21 by passing through opening-shaped spaces between the left and right main bar members 21a and the front and rear lateral cylinder members 21b of the vehicle-body central frame 21.

The installation (support) position of the situation detector 10 at the working vehicle 1 is not limited to the position illustrated in, for example, FIG. 1, and the situation detector 10 may be supported, for example, at another portion of the vehicle-body frame structural body 20 of the vehicle body 2 or at the travel frame 30 of the travel structural body 3.

The working vehicle 1 may be provided with a plurality of the situation detectors 10 and may be configured such that, for example, the vehicle body 2 is provided with at least one of the situation detectors 10 and the travel structural body 3 is provided with at least another one of the situation detectors 10.

Further, the situation detector 10 may be movable. For example, when the situation detector 10 is installed at the support member 23 as illustrated in FIG. 1, the situation detector 10 may be placed on a rail, which is provided at the support member 23, so as to be capable of moving along the rail. The direction of the movement may be any direction, such as the front-rear direction, the lateral direction, or a direction oblique to the front-rear direction and the lateral direction.

As illustrated in FIG. 8, the situation detector 10 includes a camera (an image-capturing device) 10a, a sensor 10b, and a calculator 10c. Although the situation detector 10 includes both the camera 10a and the sensor 10b in the present example embodiment, the situation detector 10 may include only one of the camera 10a and the sensor 10b.

The camera 10a is, for example, a CCD camera in which a CCD (Charge Coupled Device) image sensor is installed or a CMOS camera in which a CMOS (Complementary Metal Oxide Semiconductor) image sensor is installed.

It is sufficient for the camera 10a to be capable of capturing an image in, among forward, rearward, leftward, and rightward directions of the working vehicle 1, one or more directions including at least an advancing direction of the working vehicle 1. Preferably, the camera 10a is configured such that, for example, an angle of the situation detector 10 is changeable in the horizontal direction and the up-down direction to enable the direction of image capturing to be changed vertically and laterally. The position of image capturing can be moved by movement together with the above-described situation detector 10.

The camera 10a captures an image of surroundings of the working vehicle 1 and generates an image signal. The calculator 10c is, for example, a computer including a signal processing circuit that processes a generated image signal. Based on an image signal output from the camera 10a, the signal processing circuit detects a state (presence or absence of an object, a position of the object, a type of the object, and a size of the object, and/or the like) of an object.

The sensor 10b is an optical sensor and includes, for example, a LiDAR (Light Detection and Ranging).

The LiDAR (laser sensor) emits pulsed measurement light (laser light) millions of times per second from a light source such as a laser diode, performs scanning in the horizontal direction or the vertical direction by reflecting the measurement light by a rotating mirror, and projects light onto a predetermined detection range (sensing range).

The LiDAR receives, at a light-receiving element, reflection light that is the measurement light reflected by an object. Based on a light-reception signal output from the light-receiving element of the LiDAR, the signal processing circuit of the calculator 10c detects a state (presence or absence of an object, a position of the object, a type of the object, a size of the object, and/or the like) of an object.

Additionally, the signal processing circuit detects (TOF (Time of Flight) method) a distance to an object based on a period of time from emission of measurement light by the LiDAR to reception of reflection light. The method of detecting a distance by the LiDAR may be a method other than the TOF method.

In order to increase detection precision and the like, the optical sensor 10b may include, as an auxiliary sensor, a sound-wave sensor.

The sound-wave sensor is, for example, an airborne ultrasonic sensor such as sonar. In the airborne ultrasonic sensor, a wave transmitter transmits a measurement wave (an ultrasonic wave) to a predetermined detection range, and a wave receiver receives a reflection wave that is the measurement wave reflected by an object. Based on a signal output from the wave receiver, the signal processing circuit detects a state (presence or absence of an object, a position of the object, a type of the object, a size of the object) of an object.

Additionally, the signal processing circuit detects (TOF (Time of Flight) method) a distance to an object based on a period of time from transmission of a measurement wave by the airborne ultrasonic sensor to reception of a reflection wave. The method of detecting a distance by the sound wave sensor may be a method other than the TOF method.

The situation detector 10 detects a situation around the working vehicle 1 (the vehicle body 2, the left travel structural body 3L, and the right travel structural body 3R). The situation detector 10 detects, as a situation around the working vehicle 1, obstacle information indicating whether an obstacle and/or a person that may contact the working vehicle 1 is present near the working vehicle 1.

The situation detector 10 also detects, as a situation around the working vehicle 1, path information that is information related to a path along which the left and right travel structural bodies 3 can travel. Specifically, path information that is a value related to a path along which the travel structural bodies 3 can travel is detected. For example, the situation detector 10 detects, as path information, a width of a travel path.

A width of a travel path detected by the situation detector 10 is a width of an object that the working vehicle 1 is about to travel over between the left travel structural body 3L and the right travel structural body 3R. For example, the situation detector 10 detects, as a width of a travel path, a width of a ridge provided on a ground surface, a width of an impediment present on a ground surface and inhibiting travel, and/or the like.

For example, the situation detector 10 also detects, as path information, a height of a travel path. A height of a travel path detected by the situation detector 10 is a height of an object that the vehicle body 2 is about to travel over between the left travel structural body 3L and the right travel structural body 3R. For example, the situation detector 10 detects, as a height of a travel path, a height of a ridge provided on a ground surface, a height of an impediment present on a ground surface and inhibiting travel, and/or the like.

An impediment that inhibits travel is, for example, a groove or a hole in a ground surface, a crop planted at a ground surface, an obstacle (for example, a stone or an artificial set object) or the like present on a ground surface. Typically, the situation detector 10 can detect, as a height of an impediment, a height of a crop planted at a ground surface.

A height of a crop detected by the situation detector 10 is a height from a ground surface that each wheel 31 of the travel structural body 3 contacts to the upper end of the crop. For example, when a crop is planted at a ridge, each wheel 31 of the travel structural body 3 contacts, instead of the ridge, a portion between ridges, and, therefore, the height of the crop detected by the situation detector 10 is the total of "the height of the crop itself and the height of the ridge".

The situation detector 10 may detect, as a situation around the working vehicle 1, an inclination of a ground surface in the lateral direction. In this case, the situation detector 10 can detect, as a situation around the working vehicle 1, a height of a ground surface on which the left travel structural body 3L travels and a height of a ground surface on which the right travel structural body 3R travels. Therefore, the situation detector 10 may be installed at each of the left travel frame 30L and the right travel frame 30R.

In this case, as the situation detector 10, for example, a tilt sensor that detects a tilt of the working vehicle 1 (the vehicle body 2) in the lateral direction can be used. Alternatively, it may be configured such that the camera 10a is used as the situation detector 10 and, based on an image captured by the camera 10a, the calculator 10c detects an inclination of a ground surface in the lateral direction.

In addition to the situation detector 10 that detects a situation around the working vehicle 1, the working vehicle 1 further includes a detector that detects a state of the working vehicle 1 itself.

FIG. 8 illustrates, as detectors that detect a state of the working vehicle 1 itself, a distance detector 16 that detects a distance in the lateral direction between the left travel structural body 3L and the right travel structural body 3R, the distance corresponding to a vehicle width that is an interval between the left and right wheels 31, and a vehicle height detector 17 that detects a vehicle height that is a distance in the up-down direction from a ground contact point of each wheel 31 to a lowest portion of the vehicle body 2. Additionally, it is conceivable that a rotation speed detector that detects the rotation speed of the electric motor 53, a rotation speed detector that detects the rotation speed of each wheel 31, and/or the like are included.

As illustrated in FIG. 8, the controller 15 included in the working vehicle 1 is a device that performs various controls of the working vehicle 1. The controller 15 includes an operation unit (a CPU or the like) and a storage unit (RAM, ROM, and/or the like). The storage unit may include an external memory provided outside the controller 15. The controller 15 is connected to various devices and mechanisms illustrated in FIG. 8 through an in-vehicle LAN (in-vehicle network), such as a CAN (Controller Area Network), or a communication line.

In the controller 15, the operation unit executes various control programs stored in the storage unit to thereby control operation of the various devices and mechanisms that are connected to the controller 15 so as to be capable of communicating with the controller 15.

The controller 15 includes control units including an automated-driving control unit 15A, a distance-changing control unit 15B, a height-changing control unit 15C, a position-changing control unit 15D, and the like, and functions of these control units are each achieved by the operation unit executing a predetermined control program stored in the storage unit.

The automated-driving control unit 15A of the controller 15 controls automated driving of the working vehicle 1. The automated-driving control unit 15A is capable of executing line-tracing automated driving control and autonomous automated driving control.

In the line-tracing automated driving control, the automated-driving control unit 15A controls the inverter 38 for controlling output of the travel motor 33 of each of the wheel units 4 to control the rotation speed of the corresponding wheel 31 such that the working vehicle 1 (the vehicle body 2) moves along a preset planned travel line, and also controls each control valve of the control valve unit 27 for controlling the extension amounts of the steering cylinders 35 of each of the wheel units 4 to control the orientation (the steering angle) of the corresponding wheel 31.

In the autonomous automated driving control, based on a result of detection of the position of the working vehicle 1 (the vehicle body 2) by the position detector 11, the automated-driving control unit 15A sets an advancing direction (steering direction), a vehicle speed (speed), and/or the like of the vehicle body 2 and, so that the set steering angle (direction) and the set vehicle speed are achieved, controls the inverter 38 for controlling output of the travel motor 33 of each of the wheel units 4 to control the rotation speed of the corresponding wheel 31 and controls the control valve unit 27 (the control valves) for controlling the extension amounts of the steering cylinders 35 of each of the wheel units 4 to control the orientation (steering angle) of the corresponding wheel 31.

The line-tracing automated driving control and the autonomous automated driving control may be configured to be switched by a switch or the like. The automated-driving control unit 15A may be configured to be capable of executing one of the line-tracing automated driving control and the autonomous automated driving control. The configuration of the automated-driving control unit 15A is not limited to the configuration described above.

Further, based on obstacle information obtained through sensing (detection of an object) of surroundings of the working vehicle 1 by the situation detector 10, the automated-driving control unit 15A determines whether the working vehicle 1 during stoppage should be started, whether the working vehicle 1 during traveling should be stopped or should be steered to change the advancing direction thereof, whether driving of the working device 200 during work should be stopped, whether the working device 200 should be raised, and/or the like and, in order to achieve a determined state, controls the inverter 38 for controlling output of the travel motor 33 of the travel structural body 3, the steering cylinders 35, the inverter 54 for controlling output of the electric motor 53, or the like.

As described above, with the controller 15 including the automated-driving control unit 15A, the working vehicle 1 can perform autonomous traveling (unmanned traveling) without an operator being in the working vehicle 1. Therefore, the working vehicle 1 in the illustrated embodiment does not include an operator's seat on which an operator sits.

However, the working vehicle 1 may be a vehicle that performs autonomous traveling with an operator on the working vehicle 1. Alternatively, the working vehicle 1 may be a vehicle that performs traveling by being driven by an operator on the working vehicle 1. When the working vehicle 1 is a vehicle that allows an operator to be on the vehicle, the vehicle body 2 includes an operator's seat.

Based on information related to a width of a travel path, the information being included in path information obtained through detection by the situation detector 10, information related to a distance between the left travel structural body 3L and the right travel structural body 3R, the information being detected by the distance detector 16, and/or the like, the distance-changing control unit 15B of the controller 15 controls the control valve unit 27 (the control valves) for controlling extension and contraction of the width changing cylinder 8A and/or the width changing cylinder 8B, defining a vehicle-body shape changer, to cause the distance between the left travel structural body 3L and the right travel structural body 3R to correspond to the detected width of the travel path, that is, to properly position the left and right wheels 31 between ridges.

Based on information related to a height of a travel path, the information being included in path information obtained through detection by the situation detector 10, information related to a vehicle height detected by the vehicle height detector 17, and/or the like, the height-changing control unit 15C of the controller 15 controls the control valve unit 27 (the control valves) for controlling extension and contraction of the vehicle-body raising/lowering cylinder 9, defining a vehicle-body mover, to cause a vehicle height, which is a distance in the up-down direction from a ground contact point of each wheel 31 to a bottom end of the vehicle body 2, to correspond to the detected height of the travel path, that is, to place the vehicle body 2 over a crop that grows at the travel path.

Additionally, based on information related to an inclination of a ground surface in the lateral direction, the information being obtained through detection by the situation detector 10, and/or the like, the height-changing control unit 15C of the controller 15 controls the control valve unit 27 (the control valves) for controlling extension and contraction of the left vehicle-body raising/lowering cylinder 9L and the right vehicle-body raising/lowering cylinder 9R to adjust a difference between a piston-rod extension amount of the left vehicle-body raising/lowering cylinder 9L and a piston-rod extension amount of the right vehicle-body raising/lowering cylinder 9R, defining vehicle-body movers, such that the tilt of the vehicle body 2 in the lateral direction is adjusted.

Additionally, it is conceivable that the position-changing control unit 15D of the controller 15 measures a slip ratio of the front wheel 31F and the rear wheel 31R from a result of detection by a rotation speed detector, which detects a rotation speed of each wheel 31, and/or the like, and causes, through the communication device 14, an external device to display a warning to move the front body case 24 forward when, for example, the slip ratio of the front wheel 31F is high.

When the working vehicle 1 includes, as illustrated in FIG. 8, the battery movement actuator 81 (the vehicle-body shape changer 80) for moving the front body case 24 forward and rearward, the position-changing control unit 15D actuates (controls the corresponding control valve when the battery movement actuator 81 is a hydraulic actuator) the battery movement actuator 81 to move the front body case 24.

The above-described operations or effects of the configurations of the working vehicle 1 are described below.

(Item A1) A working vehicle 1 including a vehicle body 2, at least one wheel 31 provided on a side of the vehicle body 2, and a travel frame 30 provided on the side of the vehicle body 2 to support the at least one wheel 31, in which the travel frame 30 includes an upper frame 30u above the at least one wheel 31 and includes an apparatus positioning space at an upper portion of the upper frame 30u.

Due to the configuration described above, such a large apparatus positioning space is ensured at an upper portion of the upper frame 30u, which is positioned above the at least one wheel 31, of the travel frame 30 provided on a side of the vehicle body 2. As described above, a space extending in a large range can be provided at a location where it is difficult in ordinary vehicles to ensure a space, and apparatuses, such as the travel motor 33 for driving each wheel 31 and a liquid tank for use in spraying work, can be positioned in this space. Additionally, due to the space in which such apparatuses and/or the like can be positioned, another apparatus positioning space can be ensured at another portion inside the vehicle and can contribute to downsizing of the entire vehicle and to an increase in the degree of freedom in the layout of apparatuses and the like.

(Item A2) The working vehicle 1 according to Item A1, in which the at least one wheel 31 includes a front wheel 31F and a rear wheel 31R, and the upper frame 30u includes a front member provided above the front wheel 31F and a rear member provided above the rear wheel 31R and includes the apparatus positioning space at each of an upper portion of the front member and an upper portion of the rear member.

Due to the configuration described above, when the front wheel 31F and the rear wheel 31R are provided on a side of the vehicle body 2, an apparatus positioning space can be ensured, on the side of the vehicle body 2, above the front wheel 31F and above the rear wheel 31R, and an effect such as that described above can be obtained.

(Item A3) The working vehicle 1 according to Item A2, in which the upper frame 30u extends from a portion thereof above the front wheel 31F to a portion thereof above the rear wheel 31R, and the apparatus positioning space is provided in a range extending from a portion thereof above the front wheel 31F to a portion thereof above the rear wheel 31R.

Due to the configuration described above, such a large apparatus positioning space extending continuously from the portion thereof above the front wheel 31F to the portion thereof above the rear wheel 31R can be ensured on the side of the vehicle body 2, and an effect such as that described above can be obtained.

(Item A4) The working vehicle 1 according to any one of Items A1 to A3, in which the vehicle body 2 is movable in the up-down direction relative to the travel frame 30, and the vehicle body 2 does not include a portion that interferes with the apparatus positioning space during the movement in the up-down direction relative to the travel frame 30.

Due to the configuration described above, it is possible, since the vehicle body 2 does not include a portion that interferes with an apparatus positioning space at the upper portion of the upper frame 30u of the travel frame 30 during vertical movement thereof, to position an apparatus in the space without considering vertical movement of the vehicle body 2, even in the working vehicle 1 having a structure in which the vehicle body 2 is vertically movable with respect to the travel frame 30, and it is possible to obtain an effect such as that described above.

(Item A5) The working vehicle 1 according to any one of Items A1 to A4, including a raising/lowering device 9 provided at a location inward of the travel frame 30 in the lateral direction and configured to move the vehicle body 2 in the up-down direction.

Due to the configuration described above, with the raising/lowering device (the vehicle-body raising/lowering cylinder 9) being positioned at the location inward of the travel frame 30 in the lateral direction, such a large apparatus positioning space that is not intruded by the raising/lowering device (the vehicle-body raising/lowering cylinder 9) can be ensured at the upper portion of the upper frame 30u of the travel frame 30.

(Item A6) The working vehicle 1 according to any one of Items A2 to A5, in which the travel frame 30 includes, below the upper frame 30u, a lower frame 30b between the front wheel 31F and the rear wheel 31R and includes, on a side of the vehicle body 2, an apparatus positioning space between the front wheel 31F and the rear wheel 31R and between the upper frame 30u and the lower frame 30b of the travel frame 30.

Due to the configuration described above, since the travel frame 30 that provides an apparatus positioning space by the upper frame 30u includes the lower frame 30b between the front wheel 31F and the rear wheel 31R, a space between the upper frame 30u and the lower frame 30b can be used for positioning of an apparatus such as the battery 37. By thus providing the travel frame 30 having the configuration described above on a side of the vehicle body 2, a space between the front wheel 31F and the rear wheel 31R can be ensured, in addition to the space at an upper portion of the upper frame 30u, as an apparatus positioning space, and, due to these spaces in which apparatuses and the like can be positioned, for example, an apparatus setting space can be ensured at another portion inside the working vehicle 1 and can contribute to downsizing of the entire working vehicle 1 and to an increase in the degree of freedom in the layout of apparatuses and the like.

(Item A7) The working vehicle 1 according to any one of Items A2 to A6, in which the vehicle body 2 is connected to the travel frame 30 to be movable in the up-down direction relative to the travel frame 30.

Due to the configuration described above, since the travel frame 30 is connected to the vehicle body 2 to be movable in the up-down direction relative to the vehicle body 2 but, as described above, does not include a portion that interferes with a space at the upper portion of the upper frame 30u by vertically moving, a space having a sufficiently large width in the lateral direction can be ensured at least on one of the left and right sides of the vehicle body 2.

(Item A8) The working vehicle 1 according to Item A7, in which the vehicle body 2 does not include a portion that vertically overlaps the upper frame 30u of the travel frame 30 when the vehicle body 2 is positioned at the lowest position within a range of movement in the up-down direction relative to the travel frame 30.

Due to the configuration described above, since the vehicle body 2 does not include a portion that vertically overlaps the upper frame 30u of the travel frame 30 when the vehicle body 2 is positioned at the lowest position, the apparatus positioning space at the upper portion of the upper frame 30u is not narrowed by such a portion, and an apparatus supported at the vehicle body 2 can be positioned as low as possible in a desirable range.

(Item A9) The working vehicle 1 according to Item A7 or A8, in which the vehicle body 2 is connected to the travel frame 30 through the mast mechanism 7 positioned inward of the travel frame 30 in the lateral direction.

Due to the configuration described above, since the vehicle body 2 is connected to the travel frame 30 by the mast mechanism 7, the vehicle body 2 is vertically movable, in a stable state without wobbling, with respect to the travel frame 30. Additionally, since the mast mechanism 7 is positioned inward of the travel frame 30 in the lateral direction, such a large apparatus positioning space that is not intruded by the vehicle-body raising/lowering cylinder 9, which is a raising/lowering device, is ensured at the upper portion of the upper frame 30u of the travel frame 30.

(Item A10) The working vehicle 1 according to any one of Items A1 to A9, in which the at least one wheel 31 and the travel frame 30 are provided on each of a left side and a right side of the vehicle body 2, and the vehicle body 2 is positioned between the travel frame 30L on the left side of the vehicle body 2 and the travel frame 30R on the right side of the vehicle body 2.

Due to the configuration described above, in the working vehicle 1 including the vehicle body 2 that is provided with a front wheel 31F, a rear wheel 31R, and the travel frame 30 on each of the left side and the right side thereof and that is positioned between the left travel frame 30L and the right travel frame 30R to be vertically movable, such an apparatus setting space can be ensured at each of a portion of one travel frame 30 on the left side of the vehicle body 2 above the front wheel 31FL and the rear wheel 31RL and between the front wheel 31FL and the rear wheel 31RL and a portion of another travel frame 30 on the right side of the vehicle body 2 above the front wheel 31FR and the rear wheel 31RR and between the front wheel 31FR and the rear wheel 31RR, and the working vehicle 1 in which the degree of freedom in the layout of apparatuses and the like is high can be provided.

(Item B1) A working vehicle 1 including a vehicle body 2 movable in an up-down direction, a first apparatus (the battery 50) installed at the vehicle body 2, a second apparatus (the electric motor 53, the hydraulic pump 55) installed at the vehicle body 2, left and right travel structural bodies 3L and 3R provided on a left side and a right side of the vehicle body 2, respectively, and a moving mechanism 9 to move the vehicle body 2 in the up-down direction, in which the vehicle body 2 includes a space portion S1 at least between the first apparatus and the second apparatus, the moving mechanism 9 positions the space portion S1, in a state in which the vehicle body 2 is maximally lowered, at least between the first apparatus and the second apparatus and between the left and right travel structural bodies 3L and 3R and positions the space portion S1, in a state in which the vehicle body 2 is maximally raised, at least between the first apparatus and the second apparatus and above the left and right travel structural bodies 3L and 3R.

Due to the configuration described above, the space portion S1 usable for multiple purposes, such as for maintenance of apparatuses, is ensured in the vehicle body 2. At normal times, during which the vehicle body 2 is in a state of being lowered, an apparatus that is set in the vehicle body 2 by using the space portion S1 can be covered and protected by each travel structural body 3, and, when the vehicle body 2 is raised, the space portion S1 is positioned above the left travel structural body 3L and the right travel structural body 3R and allows a worker to access the space portion S1 by, for example, inserting hands of a worker into the space portion S1 to perform maintenance.

(Item B2) The working vehicle 1 according to Item B1, in which the vehicle body 2 includes the space portion S1 at a location rearward of the first apparatus installed at a front portion of the vehicle body 2.

Due to the configuration described above, for example, in the working vehicle 1 having a structure in which a working device 200 is coupled to a rear portion of the vehicle body 2, when the first apparatus, which is a heavy object such as a battery 50, is installed at the front portion or the like of the vehicle body 2 in consideration of the weight balance with the working device 200, the space portion S1 usable for multiple purposes can be ensured at a location rearward of the first apparatus.

(Item B3) The working vehicle 1 according to Item B2 in which the vehicle body 2 includes the space portion S1 between the first apparatus and the second apparatus that is installed at a rear portion of the vehicle body 2.

Due to the configuration described above, for example, in the working vehicle 1 having a structure in which a working device 200 is coupled to the rear portion of the vehicle body 2 and in which a PTO device, such as the PTO shaft 5 for driving the working device, the lift cylinder 61, which is a hydraulic apparatus for raising/lowering the working device 200, or the like is required to be installed at the rear portion of the vehicle body 2, a space that is long in the front-rear direction is generated at a location rearward of the first apparatus installed at the vehicle body 2, and the space portion S1 can be ensured between the first apparatus and the second apparatus even when the second apparatus, which is the PTO device such as a PTO shaft 5, a hydraulic apparatus, or the like, is installed at the rear portion of the vehicle body 2. Thus, this space can define the space portion S1 that is usable for multiple purposes.

(Item B4) The working vehicle 1 according to any one of Items B1 to B3, in which the vehicle body 2 is configured to change a position of the first apparatus forward or rearward, and the positional change of the first apparatus can switch the vehicle body 2 between a state including the space portion S1 and a state without the space portion S1.

Due to the configuration described above, for example, in the working vehicle 1 having a specification that can be changed between a specification where a working device 200 can be coupled to a rear portion of the vehicle body 2 and a specification where the working device 200 is not coupled to the rear portion of the vehicle body 2, the first apparatus, such as a battery 50, can be positioned at a suitable position in the vehicle body 2 in consideration of the weight balance and the like so as to correspond to the specification change and the like, and the position change can switch the vehicle body 2 between a state including the space portion S1 as a multi-purpose space and a state without the space portion S1. That is, the space portion S1 that is usable as a multi-purpose space can be generated in the vehicle body 2 by, for example, moving the position of the first apparatus forward.

(Item C1) A working vehicle 1 including a travel structural body 3 provided on each of a left side and a right side of the vehicle body 2, in which the travel structural body 3 includes a first wheel 31, a second wheel 31 forward or rearward of the first wheel 31, and a travel frame 30 to support an axle 31a of the first wheel 31 and an axle 31a of the second wheel 31, and the travel frame 30 supports the axle 31a of the first wheel 31 and the axle 31a of the second wheel 31 at positions offset toward one of the front or the rear of the travel frame 30.

The travel structural body 3 that includes a travel frame 30 supporting a front wheel 31F and a rear wheel 31R at forwardly or rearwardly eccentric positions thereof is provided on a side of the vehicle body 2 to thereby generate a possibility that a space can be ensured between an end portion of the vehicle body 2 corresponding to an end portion at the one end of the travel frame 30 and the axle 31a of the front wheel 31F or the rear wheel 31R that is closer to the one end of the travel frame 30, and the space can be used to, for example, mount a coupler 6, which is for coupling of a working device 200, onto the vehicle body 2 at a position guarded by the wheel 31.

(Item C2) The working vehicle 1 according to Item C1, in which a center portion M of the travel frame 30 between front and rear ends of the travel frame 30 is positioned between the first wheel 31 and the second wheel 31, and a distance D1 from the center portion M of the travel frame 30 to the axle 31a of the first wheel 31 is smaller than a distance D2 from the center portion M of the travel frame 30 to the axle 31a of the second wheel 31.

Due to the configuration described above, the front wheel 31F and the rear wheel 31R can be supported so as to be offset toward one of the front and rear ends of the travel frame 30 and generate a possibility that a mounting region S2 can be ensured between each of the left and right second wheels 31 (the left rear wheel 31RL and the right rear wheel 31RR) and an end portion (the rear end portion) of the vehicle body 2 corresponding to the axle 31a of the second wheel 31 (the rear wheel 31R), the axle 31a being one of the axles 31a of the first wheel 31 and the second wheel 31, which are the front wheel 31F and the rear wheel 31R offset toward one side from the center portion of the travel frame 30, having a longer distance from the front-rear intermediate position in the travel frame 30 as the center portion M, and the mounting region S2 can be used to, for example, mount a coupler 6, which is for coupling of a working device 200, onto the vehicle body 2 at a position guarded by the second wheel 31 (the rear wheel 31R).

(Item C3) The working vehicle 1 according to Item C1 or C2, in which one of the front and rear ends of the travel frame 30 closer to the first wheel 31 is a first end, the other of the first and rear ends of the travel frame 30 closer to the second wheel 31 is a second end, and a distance D3 from the axle 31a of the second wheel 31 to the second end is smaller than a distance D4 from the axle 31a of the first wheel 31 to the first end.

Due to the configuration described above, the front wheel 31F and the rear wheel 31R can be supported so as to be offset toward one of the front and rear ends of the travel frame 30 and generate a possibility that a space can be ensured between an end portion of the vehicle body 2 corresponding to an end portion at the one of the front and rear ends of the travel frame 30 and the wheel 31, which is the front wheel 31F or the rear wheel 31R closer to the one end of the travel frame 30, and the space can be used to, for example, mount the coupler 6, which is for coupling of the working device 200, onto the vehicle body 2 at a position guarded by the wheel 31.

(Item C4) The working vehicle 1 according to Item C3, in which the second wheel 31 protrudes forward or rearward from the second end of the travel frame 30, and the mounting region S2 is provided, at a location forward or rearward of the vehicle body 2, between a pair of the left and right second wheels 31.

Due to the configuration described above, the mounting region S2 is ensured, at a location forward or rearward of the vehicle body 2, between the left and right second wheels 31 (left rear wheel 31RL and right rear wheel 31RR). Since the distance D3 in the front-rear direction between the second end (the rear end) of the travel frame 30 and the axle 31a of the second wheel 31 (the rear wheel 31R) is small and the second wheel 31 (the rear wheel 31R) protrudes from the second end (the rear end) of the travel frame 30, the mounting region S2 surrounded by an end portion of the vehicle body 2 and the left and right second wheels 31 (left rear wheel 31RL and right rear wheel 31RR) has a shape of a fan in plan view and is a space suitable for positioning of a three-point linkage coupler 6 and the like.

(Item C5) The working vehicle 1 according to Item C4, in which the vehicle body 2 is movable to a position above the travel structural body 3, and, when the vehicle body 2 is lowered, the vehicle body 2 is positioned to be interposed between a pair of the left and right travel structural bodies 3L and 3R with the mounting region S2 being provided between the left and right second wheels 31.

Due to the configuration described above, in the vertically movable vehicle body 2, the mounting region S2 at a location forward or rearward of the vehicle body 2 can be protected, in the normal state in which the vehicle body 2 is lowered, by the left and right second wheels 31 (left rear wheel 31RL and right rear wheel 31RR).

(Item C6) The working vehicle 1 according to Item C4 or C5, in which a coupler 6 to couple a working device 200 to the vehicle body 2 is positioned within the mounting region S2 and is mounted on the vehicle body 2.

Due to the configuration described above, the working device 200 can be coupled to the vehicle body 2 through the coupler 6 provided within the mounting region S2. Additionally, such a coupler 6 is covered by the left and right second wheels (the rear wheels 31R), and protection of the coupler 6 can be increased.

(Item C7) The working vehicle 1 according to any one of Items C4 to C6, in which one of the front and rear ends of the vehicle body 2 corresponding to the first end of the travel frame 30 is a third end, the other of the front and rear ends of the vehicle body 2 corresponding to the second end of the travel frame 30 is a fourth end, and the fourth end of the vehicle body 2 is positioned closer to the third end than the axle 31a of each of the left and right second wheels 31.

Due to the configuration described above, the mounting region S2 is ensured, at a location forward or rearward of the vehicle body 2, between the left and right second wheels 31 (left rear wheel 31RL and right rear wheel 31RR). The distance in the front-rear direction between the second end (rear end) of the travel frame 30 and the axle 31a of the second wheel 31 (left rear wheel 31RL and right rear wheel 31RR) is small, and the mounting region S2 that is between the axles 31a of the left and right second wheels 31 (left rear wheel 31RL and right rear wheel 31RR) and that extends at a location forward or rearward of the fourth end (rear end) of the vehicle body 2 has a shape of a fan in plan view and is a space suitable for positioning of the three-point linkage coupler 6 and the like.

(Item C8) The working vehicle 1 according to Item C7, in which the coupler 6 to couple the working device 200 to the vehicle body 2 is positioned within the mounting region S2 and is mounted on the fourth end of the vehicle body 2.

Due to the configuration described above, the working device 200 can be coupled to the vehicle body 2 through the coupler 6 provided within the mounting region S2. Additionally, such a coupler 6 is covered by the left and right second wheels 31 (left rear wheel 31RL and right rear wheel 31RR), and protection of the coupler 6 can be increased.

(Item D1) A working vehicle including a vehicle body 2 movable in an up-down direction, a travel structural body 3 provided on a side of the vehicle body 2, and a plurality of mast mechanisms 7 each including a first member 71 attached to the travel structural body 3, a second member 72 attached to the vehicle body 2 and configured to raise and lower the vehicle body 2 by moving along the first member 71 in the up-down direction, and a restrictor 74 to restrict movement of the second member 72 in a restriction direction intersecting the up-down direction, in which the plurality of mast mechanisms 7 include a first mast mechanism 7A and a second mast mechanism 7B which are attached to the travel structural body 3 and the vehicle body 2 such that the restriction direction for restriction by the restrictor 74 of the first mast mechanism 7A and the restriction direction for restriction by the restrictor 74 of the second mast mechanism 7B differ from each other.

Due to the configuration described above, by including the first mast mechanism 7A and the second mast mechanism 7B differing from each other in the restriction directions for the respective restrictors 74, the plurality of mast mechanisms 7 have favorable rigidity against both a load applied in the direction of restriction by the first mast mechanism 7A and a load applied in the direction of restriction by the second mast mechanism 7B, and have high durability. With such a plurality of mast mechanisms 7 being provided, a situation in which a load concentrated in one direction is applied to the working vehicle 1 is avoided, and durability of, in addition to the mast mechanisms 7, various portions, such as the vehicle body 2 and the travel structural body 3, of the working vehicle 1 can be improved.

(Item D2) The working vehicle 1 according to Item D1, in which the first mast mechanism 7A is attached to the travel structural body 3 and the vehicle body 2 such that the restrictor 74 restricts movement of the second member 72 in a front-rear direction, and the second mast mechanism 7B is attached to the travel structural body 3 and the vehicle body 2 such that the restrictor 74 restricts movement of the second member 72 in a lateral direction.

Due to the configuration described above, the first mast mechanism 7A has high rigidity against a load that is applied strongly in the front-rear direction of the working vehicle 1 when the working vehicle 1 is, for example, suddenly started or suddenly stopped. The second mast mechanism 7B has high rigidity against a load that is applied strongly in the lateral direction of the working vehicle 1 when the working vehicle 1 is, for example, suddenly turned. By including both the first mast mechanism 7A and the second mast mechanism 7B, the plurality of mast mechanisms 7 have favorable rigidity against both a load in the front-rear direction of the working vehicle 1 and a load in the lateral direction thereof, and have high durability.

(Item D3) The working vehicle 1 according to Item D1 or D2, in which the vehicle body 2 is provided on a left side or a right side thereof with the plurality of mast mechanisms 7 including the first mast mechanism 7A and the second mast mechanism 7B that are arrayed in a front-rear direction.

Due to the configuration described above, since the plurality of mast mechanisms 7 including the first mast mechanism 7A and the second mast mechanism 7B are arrayed, on the left side or the right side of the vehicle body 2, in the front-rear direction, which is the longitudinal direction of the working vehicle 1, a portion of the working vehicle 1 on the left side or the right side of the vehicle body 2 can be a structure having high durability against the above-described loads.

(Item D4) The working vehicle 1 according to Item D3, in which the vehicle body 2 is provided on the left side or the right side thereof with the plurality of mast mechanisms 7 including the first mast mechanism 7A and the second mast mechanism 7B at a front portion thereof, a rear portion thereof, and a front-rear intermediate portion thereof between the front portion and the rear portion.

Due to the configuration described above, the vehicle body 2 can be supported on the left side or the right side of the vehicle body 2 firmly and vertically movably with respect to the travel structural body 3 by the plurality of mast mechanisms 7 (front mast mechanism 7F, middle mast mechanism 7M, and rear mast mechanism 7R) that are provided at a front portion, a rear portion, and a front-rear intermediate portion, respectively.

(Item D5) The working vehicle 1 according to Item D4, in which the first mast mechanism 7A is provided at each of the front portion and the rear portion, and the second mast mechanism 7B is provided at the front-rear intermediate portion.

Due to the configuration described above, on the left side or the right side of the vehicle body 2, the first mast mechanism 7A having a structure that restricts movement of the vehicle-body-side mast member 72 in the front-rear direction is provided at each of a front portion and a rear portion to ensure rigidity against a load in a direction in which the load is easily applied to the front portion and the rear portion, and the second mast mechanism 7B having a structure that restricts movement of the vehicle-body-side mast member 72 in the lateral direction is provided at a front-rear intermediate portion to ensure rigidity against a load in a direction in which the load is easily applied to the front-rear intermediate portion. By such a plurality of mast mechanisms 7, the vehicle body 2 can be supported on the left side or the right side of the vehicle body 2 firmly and vertically movably with respect to the travel structural body 3.

(Item D6) The working vehicle according to Item D1 or D2, in which the vehicle body 2 is provided on each of a left side and a right side thereof with the plurality of mast mechanisms 7 including the first mast mechanism 7A and the second mast mechanism 7B that are arrayed in a front-rear direction.

Due to the configuration described above, since the plurality of mast mechanisms 7 including the first mast mechanism 7A and the second mast mechanism 7B are arrayed, on both the left side and the right side of the vehicle body 2, in the front-rear direction, which is the longitudinal direction of the working vehicle 1, portions of the working vehicle 1 on both the left and right sides of the vehicle body 2 can be structures having high durability against the above-described loads.

(Item D7) The working vehicle according to Item D6, wherein the vehicle body 2 is provided on each of the left side and the right side thereof with the plurality of mast mechanisms 7 including the first mast mechanism 7A and the second mast mechanism 7B at a front portion thereof, a rear portion thereof, and a front-rear intermediate portion thereof between the front portion and the rear portion.

Due to the configuration described above, the vehicle body 2 can be supported, on both the left side and the right side of the vehicle body 2, firmly and vertically movably with respect to the travel structural body 3 by the plurality of mast mechanisms 7 (front mast mechanism 7F, middle mast mechanism 7M, and rear mast mechanism 7R) that are provided at a front portion, a rear portion, and a front-rear intermediate portion, respectively.

(Item D8) The working vehicle 1 according to Item D7, in which the first mast mechanism 7A is provided at each of the front portion and the rear portion, and the second mast mechanism 7B is provided at the front-rear intermediate portion.

Due to the configuration described above, on both the left side and the right side of the vehicle body 2, the first mast mechanism 7A is provided at each of a front portion and a rear portion to ensure rigidity against a load in a direction in which the load is easily applied to the front portion and the rear portion, and the second mast mechanism 7B is provided at a front-rear intermediate portion to ensure rigidity against a load in a direction in which the load is easily applied to the front-rear intermediate portion. By such a plurality of mast mechanisms 7 (the front mast mechanism 7F, the middle mast mechanism 7M, and the rear mast mechanism 7R), the vehicle body 2 can be supported on both the left side and the right side of the vehicle body 2 firmly and vertically movably with respect to the travel structural body 3.

(Item D9) The working vehicle according to Item D6, in which, among the plurality of mast mechanisms 7 on the left side and the plurality of mast mechanisms 7 on the right side, the mast mechanism 7 on the left side and the mast mechanism 7 on the right side which are arranged at positions coinciding to each other in the front-rear direction are unified into either one of the first mast mechanism 7A or the second mast mechanism 7B.

Due to the configuration described above, it is possible to eliminate distortion and the like due to a difference between the left side and the right side of the vehicle body 2 in terms of the direction in which rigidity against a load can be ensured, and it is possible to increase durability of various portions in the lateral direction of the working vehicle 1.

(Item D10) The working vehicle 1 according to any one of Items D1 to D6, in which the travel structural body 3 includes an inner side surface facing a side surface of the vehicle body 2, and the first member 71 is attached to the inner side surface of the travel structural body 3.

Due to the configuration described above, since the vehicle-body-side mast member 72 and the restrictors 74 move upward with respect to the travel-side mast member 71 in response to the vehicle body 2 being raised, the vehicle-body-side mast member 72 and the restrictors 74 have a possibility of being exposed at a location above the travel structural body 3, while, since the travel-side mast member 71 remains in a state of being fixed to the inner side surface of the travel structural body 3 regardless of upward movement of the vehicle-body-side mast member 72, the travel-side mast member 71 is not exposed to the outside, protection of the mast mechanisms 7 themselves can be ensured, a large space that is not intruded by the mast mechanisms 7 during raising of the vehicle body 2 can be ensured above the travel structural body 3, and this space can be used for positioning of apparatuses to increase freedom in the layout of apparatuses in the entire working vehicle 1.

Although an embodiment of the present invention has been described above, it should be noted that the embodiment disclosed here is presented as an example in all aspects and does not imply any limitation. The scope of the present invention is defined not by the above description but by the claims and is intended to include all modifications within the meaning and scope equivalent to the claims.

### Reference Signs List

- 1: working vehicle
- 2: vehicle body
- 3: travel structural body
- 3L: left travel structural body
- 3R: right travel structural body
- 7: mast mechanism
- 7A: first mast mechanism
- 7B: second mast mechanism
- 20: vehicle-body frame structural body
- 22: vehicle-body side portion frame
- 30: travel frame
- 30L: left travel frame
- 30R: right travel frame
- 70: mast member
- 71: travel-side mast member
- 72: vehicle-body-side mast member
- 73: intermediate mast member
- 74: restrictor
- 75: restricting member

## Claims

1. A working vehicle comprising:
a vehicle body movable in an up-down direction;
a travel structural body provided on a side of the vehicle body; and
a plurality of mast mechanisms each including a first member attached to the travel structural body, a second member attached to the vehicle body and configured to raise and lower the vehicle body by moving along the first member in the up-down direction, and a restrictor to restrict movement of the second member in a restriction direction intersecting the up-down direction, wherein
the plurality of mast mechanisms include a first mast mechanism and a second mast mechanism which are attached to the travel structural body and the vehicle body such that the restriction direction for restriction by the restrictor of the first mast mechanism and the restriction direction for restriction by the restrictor of the second mast mechanism differ from each other.

2. The working vehicle according to claim 1, wherein
the first mast mechanism is attached to the travel structural body and the vehicle body such that the restrictor restricts movement of the second member in a front-rear direction, and
the second mast mechanism is attached to the travel structural body and the vehicle body such that the restrictor restricts movement of the second member in a lateral direction.

3. The working vehicle according to claim 1 or 2, wherein the vehicle body is provided on a left side or a right side thereof with the plurality of mast mechanisms including the first mast mechanism and the second mast mechanism that are arrayed in a front-rear direction.

4. The working vehicle according to claim 3, wherein the vehicle body is provided on the left side or the right side thereof with the plurality of mast mechanisms including the first mast mechanism and the second mast mechanism at a front portion thereof, a rear portion thereof, and a front-rear intermediate portion thereof between the front portion and the rear portion.

5. The working vehicle according to claim 4, wherein the first mast mechanism is provided at each of the front portion and the rear portion, and the second mast mechanism is provided at the front-rear intermediate portion.

6. The working vehicle according to claim 1 or 2, wherein the vehicle body is provided on each of a left side and a right side thereof with the plurality of mast mechanisms including the first mast mechanism and the second mast mechanism that are arrayed in a front-rear direction.

7. The working vehicle according to claim 6, wherein the vehicle body is provided on each of the left side and the right side thereof with the plurality of mast mechanisms including the first mast mechanism and the second mast mechanism at a front portion thereof, a rear portion thereof, and a front-rear intermediate portion thereof between the front portion and the rear portion.

8. The working vehicle according to claim 7, wherein the first mast mechanism is provided at each of the front portion and the rear portion, and the second mast mechanism is provided at the front-rear intermediate portion.

9. The working vehicle according to claim 6, wherein, among the plurality of mast mechanisms on the left side and the plurality of mast mechanisms on the right side, the mast mechanism on the left side and the mast mechanism on the right side which are arranged at positions coinciding to each other in the front-rear direction are unified into either one of the first mast mechanism or the second mast mechanism.

10. The working vehicle according to claim 1, wherein
the travel structural body includes an inner side surface facing a side surface of the vehicle body, and
the first member is attached to the inner side surface of the travel structural body.
